# EUROPEAN PATENT APPLICATION

(11) **EP 4 804 681 A1**
(43) Date of publication of application: **09.09.2026**
(21) Application number: 24884789.9
(22) Date of filing: 30.10.2024
(51) Int. Cl.: H04W 72/1273

(54) **RESOURCE SCHEDULING PROCESSING METHOD, REFERENCE RESOURCE OBJECT DETERMINATION METHOD, AND RELATED DEVICE**

(30) Priority: 03.11.2023 CN 202311457644
(71) Applicant: Vivo Mobile Communication Co., Ltd., Dongguan, Guangdong 523863 (CN)
(72) Inventor: LIU, Siqi, Dongguan, Guangdong 523863 (CN); JI, Zichao, Dongguan, Guangdong 523863 (CN); LI, Gen, Dongguan, Guangdong 523863 (CN)
(74) Representative: Walaski, Jan Filip
(86) International application number: PCT/CN2024/128386
(87) International publication number: WO 2025/092787

(57) **Abstract**

The present application belongs to the technical field of communications. Disclosed are a resource scheduling processing method, a reference resource object determination method, and a related device. The resource scheduling processing method in the embodiments of the present application comprises: a terminal determining a target count, wherein the target count comprises any one of the following: a first count for a first resource object, which first count refers to the first resource object having been counted N times, and a second count for a downlink assignment index (DAI) of the first resource object, which second count refers to the DAI having been counted N times regarding the first resource object; and the terminal determining target feedback information on the basis of the target count, wherein the first resource object is a resource object indicated or scheduled by downlink control information (DCI), and N is an integer greater than 1, or the number of times the first resource object is scheduled or indicated cannot exceed 1.

## Description

### CROSS-REFERENCE TO RELATED APPLICATIONS

The present application claims priority to the Chinese Patent Application No. 202311457644.9 filed with the China National Intellectual Property Administration on November 3, 2023 and entitled "RESOURCE SCHEDULING PROCESSING METHOD, REFERENCE RESOURCE OBJECT DETERMINING METHOD, AND RELATED DEVICES", which is incorporated herein by reference in its entirety.

### TECHNICAL FIELD

The present application pertains to the field of communication technologies, and specifically relates to a resource scheduling processing method, a reference resource object determining method, and related devices.

### BACKGROUND

With the development of communication technologies, communication systems support scheduling of multiple cells (for example, cell combinations) via single downlink control information (Downlink Control Information, DCI). Such DCI may be referred to as multi-cell scheduling DCI (multi-cell scheduling DCI, mc-DCI). In addition, multiple different cell combinations may be scheduled within one monitoring occasion, but these combinations may share the same specific cell (for example, a cell with the smallest identifier or index). In this case, how to perform DAI counting or how to count the specific cell in determining feedback information have become an urgent problem to be solved.

### SUMMARY

Embodiments of the present application provide a resource scheduling processing method, a reference resource object determining method, and related devices, capable of solving the problem of DAI counting or specific cell counting when determining feedback information in the case of scheduling multiple different cell combinations within one monitoring occasion.

According to a first aspect, a resource scheduling processing method is provided and includes:
determining, by a terminal, a target count, where the target count includes any one of the following: a first count of a first resource object, the first count satisfying that the first resource object is counted N times; and a second count of a downlink assignment index DAI for the first resource object, the second count satisfying that DAI counting is performed N times for the first resource object; and
determining, by the terminal, target feedback information based on the target count; where
the first resource object is a resource object indicated or scheduled by downlink control information DCI, N is an integer greater than 1, or the number of times that the first resource object is scheduled or indicated does not exceed 1. According to a second aspect, a resource scheduling processing method is provided and includes:
sending, by a network-side device, at least one of downlink control information DCI and a downlink assignment index DAI associated with DCI to a terminal, where the DCI is used for scheduling a resource object combination, and the resource object combination includes a first resource object; and
the first resource object is counted N times, or DAI counting is performed N times for the first resource object; where
N is an integer greater than 1, or the number of times that the first resource object is scheduled or indicated does not exceed 1.

According to a third aspect, a reference resource object determining method is provided and includes:
in a case that a resource object set or a resource object combination includes at least one of resource objects with at least two SCSs and resource objects with at least two cyclic prefixes CPs, determining, by a terminal, a reference resource object; and
performing, by the terminal, at least one of the following based on the reference resource object: performing PDCCH reception, performing blind detection, determining a scheduling restriction, determining a DCI restriction, determining a terminal capability, determining a first resource object, determining target feedback information, and determining an uplink resource for sending target feedback information.

According to a fourth aspect, a resource scheduling processing apparatus is provided and includes:
a first determining module, configured to determine a target count, where the target count includes any one of the following: a first count of a first resource object, the first count satisfying that the first resource object is counted N times; and a second count of a downlink assignment index DAI for the first resource object, the second count satisfying that DAI counting is performed N times for the first resource object; and
a second determining module, configured to determine target feedback information based on the target count; where
the first resource object is a resource object indicated or scheduled by downlink control information DCI, N is an integer greater than 1, or the number of times that the first resource object is scheduled or indicated does not exceed 1. According to a fifth aspect, a resource scheduling processing apparatus is provided and includes:
a sending module, configured to send at least one of downlink control information DCI and a downlink assignment index DAI associated with DCI to a terminal, where the DCI is used for scheduling a resource object combination, and the resource object combination includes a first resource object; and
the first resource object is counted N times, or DAI counting is performed N times for the first resource object; where
N is an integer greater than 1, or the number of times that the first resource object is scheduled or indicated does not exceed 1.

According to a sixth aspect, a reference resource object determining apparatus is provided and includes:
a third determining module, configured to, in a case that a resource object set or a resource object combination includes at least one of resource objects with at least two SCSs and resource objects with at least two cyclic prefixes CPs, determine a reference resource object; and
an execution module, configured to perform at least one of the following based on the reference resource object: performing PDCCH reception, performing blind detection, determining a scheduling restriction, determining a DCI restriction, determining a terminal capability, determining a first resource object, determining target feedback information, and determining an uplink resource for sending target feedback information.

According to a seventh aspect, a terminal is provided, where the terminal includes a processor and a memory, where the memory stores a program or instructions executable on the processor, and the program or instructions, when executed by the processor, implement the steps of the method according to the first aspect, or implement the steps of the method according to the third aspect.

According to an eighth aspect, a terminal is provided and includes a processor and a communication interface, where the processor is configured to determine a target count, the target count including any one of the following: a first count of a first resource object, the first count satisfying that the first resource object is counted N times; and a second count of a downlink assignment index DAI for the first resource object, the second count satisfying that DAI counting is performed N times for the first resource object; and determine target feedback information based on the target count; where the first resource object is a resource object indicated or scheduled by downlink control information DCI, N is an integer greater than 1, or the number of times that the first resource object is scheduled or indicated does not exceed 1; or
the processor is configured to, in a case that a resource object set or a resource object combination includes at least one of resource objects with at least two SCSs and resource objects with at least two cyclic prefixes CPs, determine a reference resource object; and perform at least one of the following based on the reference resource object: performing PDCCH reception, performing blind detection, determining a scheduling restriction, determining a DCI restriction, determining a terminal capability, determining a first resource object, determining target feedback information, and determining an uplink resource for sending target feedback information.

According to a ninth aspect, a network-side device is provided, where the network-side device includes a processor and a memory, where the memory stores a program or instructions executable on the processor, and the program or instructions, when executed by the processor, implement the steps of the method as described in the second aspect.

According to a tenth aspect, a network-side device is provided and includes a processor and a communication interface, where the communication interface is configured to send at least one of downlink control information DCI and a downlink assignment index DAI associated with DCI to a terminal, where the DCI is used for scheduling a resource object combination, and the resource object combination includes a first resource object; and
the first resource object is counted N times, or DAI counting is performed N times for the first resource object; where
N is an integer greater than 1, or the number of times that the first resource object is scheduled or indicated does not exceed 1.

According to an eleventh aspect, a readable storage medium is provided, where the readable storage medium stores a program or instructions, and the program or instructions, when executed by a processor, implement the steps of the method according to the first aspect, or implement the steps of the method according to the second aspect, or implement the steps of the method according to the third aspect.

According to a twelfth aspect, a wireless communication system is provided and includes: a terminal and a network-side device, where the terminal is configured to perform the steps of the method according to the first aspect, and the network-side device is configured to perform the steps of the method according to the second aspect. According to a thirteenth aspect, a chip is provided, where the chip includes a processor and a communication interface, where the communication interface is coupled with the processor, and the processor is configured to run a program or instructions to implement the method according to the first aspect, or implement the method according to the second aspect, or implement the steps of the method according to the third aspect.

According to a fourteenth aspect, a computer program/program product is provided, where the computer program/program product is stored in a storage medium, and the program/program product is executed by at least one processor to implement the method according to the first aspect, or implement the method according to the second aspect, or implement the steps of the method according to the third aspect.

In the embodiments of the present application, a terminal determines a target count, where the target count includes any one of the following: a first count of a first resource object, the first count satisfying that the first resource object is counted N times; and a second count of a downlink assignment index DAI for the first resource object, the second count satisfying that DAI counting is performed N times for the first resource object; and the terminal determines target feedback information based on the target count; where the first resource object is a resource object indicated or scheduled by downlink control information DCI, N is an integer greater than 1, or the number of times that the first resource object is scheduled or indicated does not exceed 1. In this way, since the manner of performing DAI counting for the first resource object and the manner of calculating the first resource object in the process of determining feedback information are clarified, consistency in understanding of feedback information between the terminal and the network-side device can be ensured.

### BRIEF DESCRIPTION OF DRAWINGS

FIG. 1 is a block diagram of a wireless communication system to which embodiments of the present application are applicable;
FIG. 2 is a schematic flowchart of a resource scheduling processing method according to embodiments of the present application;
FIG. 3 is a schematic flowchart of another resource scheduling processing method according to embodiments of the present application;
FIG. 4 is a schematic flowchart of a reference resource object determining method according to embodiments of the present application;
FIG. 5 is a schematic structural diagram of a resource scheduling processing apparatus according to embodiments of the present application;
FIG. 6 is a schematic structural diagram of another resource scheduling processing apparatus according to embodiments of the present application;
FIG. 7 is a schematic structural diagram of a reference resource object determining apparatus according to embodiments of the present application;
FIG. 8 is a schematic structural diagram of a communication device according to embodiments of the present application;
FIG. 9 is a schematic structural diagram of a terminal according to embodiments of the present application; and
FIG. 10 is a schematic structural diagram of a network-side device according to embodiments of the present application.

### DESCRIPTION OF EMBODIMENTS

The terms "first", "second", and the like in the present application are used to distinguish between similar objects instead of describing a specific order or sequence. It should be understood that terms used in this way are interchangeable in appropriate circumstances so that the embodiments of the present application can be implemented in other orders than the order illustrated or described herein. In addition, "first" and "second" are usually used to distinguish objects of a same type, and do not restrict a quantity of objects. For example, there may be one or a plurality of first objects. In addition, the term "or" in the present application indicates at least one of the connected objects, for example, "A or B" encompasses three scenarios: scenario one, including A but no B; scenario two, including B but no A; and scenario three, including both A and B. The character "/" generally represents an "or" relationship between the contextually associated objects.

The term "indication" in the present application may be either a direct indication (or explicit indication) or an indirect indication (or implicit indication). The direct indication can be understood as the sender explicitly informing the receiver of specific information, operations to be performed, or request results in the sent indication; and the indirect indication can be understood as the receiver determining the corresponding information according to the indication sent by the sender, or making a judgment and determining the operations to be performed or request results according to the judgment result.

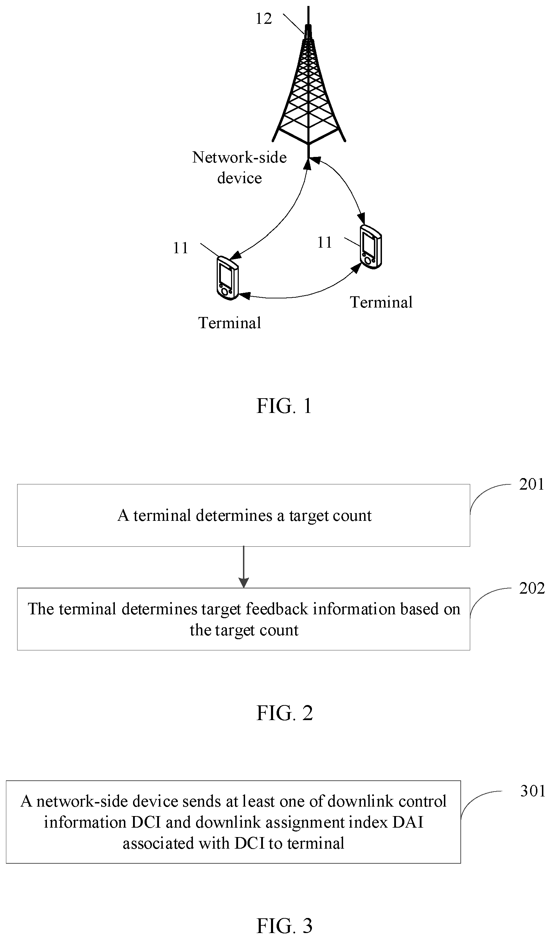

It should be noted that technologies described in the embodiments of the present application are not limited to a long term evolution (Long Term Evolution, LTE)/LTE-advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of the present application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6^{th} generation (6^{th} Generation, 6G) communication system. FIG. 1 is a block diagram of a wireless communication system to which the embodiments of the present application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a handheld computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), a vehicle user equipment (Vehicle User Equipment, VUE), a ship-borne equipment, a pedestrian user equipment (Pedestrian User Equipment, PUE), a smart home (home devices with a wireless communication function, for example, a refrigerator, a television, a washing machine, or a furniture), a game console, a personal computer (Personal Computer, PC), a teller machine, or self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. The vehicle user equipment may also be referred to as a vehicle terminal, a vehicle controller, a vehicle module, a vehicle component, a vehicle chip, or a vehicle unit. It should be noted that the embodiments of the present application do not impose any limitation on a specific type of the terminal 11. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a Node B (Node B, NB), an evolved Node B (Evolved Node B, eNB), the next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home B node (home Node B, HNB), a home evolved B node (home evolved Node B), a transmission reception point (Transmission Reception Point, TRP), or other appropriate terms in the field, provided that the same technical effect is achieved. The base station is not limited to specific technical terms. It should be noted that in the embodiments of the present application, the base station in the NR system is used as an example for introduction, and the specific type of the base station is not limited.

For ease of understanding, the following describes some content involved in the embodiments of the present application.

In the related art, one mc-DCI supports scheduling of physical uplink shared channels (Physical Uplink Shared Channel, PUSCH) or physical downlink shared channels (Physical downlink shared channel, PDSCH) of multiple cells, for example, DCI format (format) 3-0 and DCI format 3-1.

The related art also supports the following framework:
Multiple cells may be divided into multiple cell sets (cell set). For example, cell 1, cell 2, cell 3, cell 4, cell 5, cell 6, cell 7, and cell 8 are divided into two cell sets, a first cell set includes cell 1, cell 2, cell 3, and cell 4, and a second cell set includes cell 5, cell 6, cell 7, and cell 8.

One cell set may be divided into multiple cell combinations (cell combination). For example, the first cell set may include the following cell combinations: cell 2 and cell 3; cell 2 and cell 4; and cell 1 and cell 3.

One DCI can schedule or indicate one cell combination at a time, and specific scheduling or indication methods include the following two types:

### Method 1: Scheduled cell indicator based (scheduled cell indicator based).

For example, radio resource control (Radio Resource Control, RRC) configures one cell combination table for each cell set, each cell combination table has a corresponding index (index), and mc-DCI carries a field indicating one index. For example, '01' corresponds to cell 1 and cell 3, mc-DCI indicating '01' means indicating cell 1 and cell 3, and such mc-DCI only carries frequency domain resource allocation (Frequency Domain Resource Allocation, FDRA) fields of cell 1 and cell 3.

### Method 2: FDRA based.

For example, an mc-DCI carries FDRA fields of cell 1, cell 2, cell 3, and cell 4, where an invalid value indicated by an FDRA field means that the corresponding cell is not scheduled.

Each cell set has one reference cell (reference cell). Optionally, blind detection times and DCI size (size) calculation for an mc-DCI of the cell set is performed on the reference cell.

Each reference cell, cell set, or individual cell has a corresponding DCI count limit, scheduling times limit, or terminal capability. For example, within one monitoring occasion (monitoring occasion), at most N1 mc-DCIs for the reference cell or cell set can schedule at least part of the cells in the cell set. For example, within one monitoring occasion, at most N2 single DCIs (single-cell scheduling DCI, sc-DCI) for one cell in the cell set can schedule the cell.

During DAI counting, if a certain cell combination is scheduled, DAI counting (for example, DAI+1) is performed for the cell with the smallest identifier (cell identifier) or the smallest index (cell index) in the cell combination, or hybrid automatic repeat request acknowledgement (Hybrid automatic repeat request acknowledgement, HARQ-ACK) bits (bit) are generated based on DAI counting for the cell with the smallest identifier or the smallest index in the cell combination. Optionally, herein, the DAI counting may be considered associated with the DAI counting for the cell with the smallest identifier or the smallest index in the cell combination.

When generating the number of HARQ-ACK bits, traversal is performed at a cell set level and on each cell in the cell set, so that HARQ-ACK bit strings corresponding to each cell are concatenated to generate HARQ-ACK bits. HARQ-ACK bit information corresponding to one cell combination is placed at a bit position corresponding to the cell with the smallest identifier or the smallest index in the cell combination. For cells that are not scheduled, corresponding NACKs are generated.

It should be understood that during DAI counting, multiple different combinations may be scheduled within one monitoring occasion, but these combinations may share the same cell with the smallest identifier or the smallest index. In this case, how to perform DAI counting and the correspondence between each count and the multiple DCIs in the case of multiple counts remain unclear. Therefore, the resource scheduling processing method of the present application is proposed.

Meanwhile, the reference cell related to blind detection or DCI restrictions may not be the same as the cell with the smallest identifier or the smallest index for DAI counting or HARQ-ACK generation, and a mismatch problem occurs when the two have different SCSs. For example, the subcarrier spacing (subcarrier space, SCS) of the reference cell is 15 kHz, the corresponding restrictions include at least one of the following: N1=1 and N2=1; however, if the SCS of the cell with the smallest identifier or the smallest index is 30 kHz, the scheduled times cannot exceed N1 even if the scheduled cell is 30 kHz. Therefore, it is necessary to redefine a method for determining a reference cell, and thus the reference resource object determining method of the present application is proposed.

Hereinafter, the resource scheduling processing method according to the embodiments of the present application is described in detail in combination with the accompanying drawings through some embodiments and application scenarios thereof.

Referring to FIG. 2, an embodiment of the present application provides a resource scheduling processing method. As shown in FIG. 2, the resource scheduling processing method includes the following steps.

Step 201. A terminal determines a target count, where the target count includes any one of the following: a first count of a first resource object, the first count satisfying that the first resource object is counted N times; and a second count of a downlink assignment index DAI for the first resource object, the second count satisfying that DAI counting is performed N times for the first resource object.

Step 202. The terminal determines target feedback information based on the target count.

The first resource object is a resource object indicated or scheduled by downlink control information DCI, N is an integer greater than 1, or the number of times that the first resource object is scheduled or indicated does not exceed 1.

In this embodiment of the present application, the terminal may monitor DCI and DAI sent by the network-side device at a monitoring occasion configured by the network-side device, and determine the target count based on the monitored DCI and/or DAI. After determining the target count, the terminal may determine the target feedback information based on the target count, and send the target feedback information to the network-side device. The target feedback information may be considered as feedback information corresponding to DCI, or may be considered as feedback information corresponding to a resource object combination, or may be considered as feedback information corresponding to a first resource object. Specifically, the target feedback information may be HARQ-ACK feedback information.

In some embodiments, the resource object combination may include one or more resource objects. The resource object may be understood as a cell, a carrier, a frequency domain resource, a resource set, a subchannel, a resource pool, a bandwidth part (Bandwidth Part, BWP), or a resource block set (Resource Block set, RB set). The first resource object may be understood as or replaced with a specific resource object, such as a specific cell.

Optionally, the second count of DAI for the first resource object may be understood as, when DAI counts DCI, counting is performed for the DCI related to the first resource object. For example, counting is performed for the DCI that indicates or schedules the first resource object.

Optionally, the expectation of the terminal that the number of times that the first resource object is scheduled or indicated does not exceed 1 may be understood as the UE does not expect the number of scheduling times of the first resource object to exceed 1 within a same time unit or A same time units. The time unit may be a monitoring occasion, slot or symbol. Preferably, the time unit is interpreted as a same monitoring occasion.

Optionally, the first resource object being counted N times may be understood as that the first resource object is counted N times within A time units (for example, one monitoring occasion); performing N DAI counts for the first resource object may be understood as performing N DAI counts for the first resource object within one monitoring occasion, for example, DAI counts the DCI indicating or scheduling the first resource object for N times.

Optionally, when the number of times that the first resource object is scheduled or indicated does not exceed 1, N is equal to 1. The number of times that the first resource object is scheduled or indicated not exceeding 1 may be understood as the expectation of the terminal that the number of times that the first resource object is scheduled or indicated does not exceed 1.

In this embodiment of the present application, a terminal determines a target count, where the target count includes any one of the following: a first count of a first resource object, the first count satisfying that the first resource object is counted N times; and a second count of a downlink assignment index DAI for the first resource object, the second count satisfying that DAI counting is performed N times for the first resource object; and the terminal determines target feedback information based on the target count; where the first resource object is a resource object indicated or scheduled by downlink control information DCI, N is an integer greater than 1, or the number of times that the first resource object is scheduled or indicated does not exceed 1. In this way, since the manner of performing DAI counting for the first resource object and the manner of calculating the first resource object in the process of determining feedback information are clarified, consistency in understanding of feedback information between the terminal and the network-side device can be ensured.

Optionally, in some embodiments, N includes at least one of the following:
a DCI count limit, scheduling times limit, or terminal capability corresponding to a first object, where the first object is one resource object, one resource object combination, or the first resource object;
a DCI count limit, scheduling times limit, or terminal capability corresponding to a second object, where the second object includes a resource object set and any one of the following: one resource object, one resource object combination, and the first resource object; and
a DCI count limit, scheduling times limit, or terminal capability corresponding to a third object, where the third object includes a resource object set;
the number of scheduling times of the first resource object;
the number of times that the first resource object is scheduled or indicated;
the number of DCIs scheduling or indicating the first resource object;
the number of DCIs including an information field corresponding to the first resource object; and
the number of data scheduled or received on the first resource object.

In this embodiment of the present application, the foregoing definitions of N may be for one or multiple time units. For example, the DCI count limit, scheduling times limit, or terminal capability corresponding to a first object may be understood as the DCI count limit, scheduling times limit, or terminal capability corresponding to a first object within one or multiple time units. The time unit may be a symbol, a slot (slot), or a monitoring occasion.

Optionally, in some embodiments, the foregoing limitations or definitions are applicable to N when N is greater than 1.

It should be noted that, in some embodiments, in a case that scheduling or indication is performed based on scheduled cell indicator based indication (scheduled cell indicator based indication), N may include any one of the following:
a DCI count limit, scheduling times limit, or terminal capability corresponding to a first object;
a DCI count limit, scheduling times limit, or terminal capability corresponding to the second object;
A DCI count limit, scheduling times limit, or terminal capability corresponding to the third object;
the number of times that the first resource object is scheduled or indicated;
the number of DCIs scheduling or indicating the first resource object; and
the number of data scheduled or received on the first resource object.

In some embodiments, in a case that scheduling or indication is performed based on FDRA, N may include any one of the following:
A DCI count limit, scheduling times limit, or terminal capability corresponding to a first object;
A DCI count limit, scheduling times limit, or terminal capability corresponding to the second object;
A DCI count limit, scheduling times limit, or terminal capability corresponding to the third object;
the number of DCIs including an information field corresponding to the first resource object; and
the number of data scheduled or received on the first resource object.

Optionally, data corresponding to the first resource object may be understood as data scheduled for transmission on the first resource object via DCI.

In this embodiment of the present application, since the definition of N when N is greater than 1 is clarified, scheduling of multiple resource objects via one DCI is realized, thereby reducing resource overhead.

Optionally, in some embodiments, a target arrangement order of at least one of N counts corresponding to the first resource object, N DCIs corresponding to the first resource object, N indications or scheduling operations corresponding to the first resource object, and feedback information associated with N indications or scheduling operations corresponding to the first resource object includes any one of the following:
an order based on a start point or end point of data on the first resource object;
an order based on an earliest start point, earliest end point, latest start point, or latest end point of all data corresponding to the first resource object combination;
an order based on a start point or end point of data corresponding to a preset resource object in the first resource object combination;
an order based on DCIs indicating or scheduling the first resource object; and
an order based on first information of resource objects in the first resource object combination, where the first information includes at least one of the following: identifier, index, SCS, blind detection times, blind detection capability, DCI count limit corresponding to the resource object, DCI scheduling times limit corresponding to the resource object, and terminal capability corresponding to the resource object.

In this embodiment of the present application, the N DCIs may be understood as N DCIs indicating or scheduling the first resource object.

It should be noted that, indicating or scheduling the first resource object mentioned in the various embodiments of the present application does not mean that the DCI only indicates or schedules the first resource object. In a possible case, the DCI indicates or schedules a group of cells or a cell combination, the group of cells or the cell combination includes the first resource object.

Optionally, the feedback information associated with N indications or scheduling operations corresponding to the first resource object may be understood as HARQ-ACK feedback information associated with N indications or scheduling operations corresponding to the first resource object. The target feedback information may include HARQ-ACK feedback information corresponding to one or more different first resource objects. Taking feedback information as an example, assuming that a start point of data corresponding to the first resource object indicated or scheduled by the first DCI is located after a start point of data corresponding to a first resource object indicated or scheduled by the second DCI, the feedback information associated with the second DCI is located after the feedback information associated with the first DCI. Certainly, in other embodiments, this order may also be reversed, and the feedback information associated with the second DCI is located before the feedback information associated with the first DCI.

Optionally, an order based on an earliest start point, earliest end point, latest start point, or latest end point of all data corresponding to the first resource object combination may be understood as an order based on the earliest start point, earliest end point, latest start point, or latest end point of data corresponding to all resource objects in the first resource object combination.

For example, first resource object combination 1 includes two resource objects, namely, cell 1 and cell 2; and first resource object combination 2 includes two resource objects, namely, cell 1 and cell 3. If a data start point corresponding to cell 1 in first resource object combination 1 is a first time, a data start point corresponding to cell 2 in first resource object combination 1 is a second time, a data start point corresponding to cell 1 in first resource object combination 2 is a third time, a data start point corresponding to cell 3 in first resource object combination 2 is a fourth time, the order of the first time, second time, third time, and fourth time from earlier to later is: fourth time, first time, second time, and third time. In this case, an earliest start point of all data corresponding to first resource object combination 1 is the first time, and an earliest start point of all data corresponding to first resource object combination 2 is the fourth time. Since the fourth time is earlier than the first time, it may be determined that feedback information corresponding to scheduling first resource object combination 1 is located after feedback information corresponding to scheduling first resource object combination 2.

Optionally, an order based on first information of resource objects in the first resource object combination may be understood as sorting in descending or ascending order of the first information, or may be understood as sorting in descending or ascending order of capability corresponding to the first information. For example, taking cell ID as an example, if the first L cell ids of two resource object combinations are the same and an (L+1)th id exists, a target arrangement order of information corresponding to the two resource objects may be determined based on a value of the (L+1)th id. For example, a smaller cell id corresponds to an earlier order, a larger id corresponds to a later order, and vice versa. If the first L cell ids of two resource object combinations are the same, one resource object combination has an (L+1)th cell id, and the other resource object combination has no (L+1)th cell id, the resource object combination without the cell id may be set to correspond to an earlier order, the resource object combination with the cell id may be set to correspond to a later order, and vice versa.

In this embodiment of the present application, since the target arrangement order is clarified, understanding of feedback information by the network-side device is simplified, and consistency in understanding of feedback information between the terminal and the network-side device is ensured.

Optionally, in some embodiments, in a case that the target arrangement order is an order based on a start point or end point of data corresponding to a first resource object or an order based on a start point or end point of data corresponding to a preset resource object in the first resource object combination, the target arrangement order satisfies any one of the following:
in a case that a target resource object scheduled or indicated by target DCI has no corresponding data, ranking data of the target resource object is determined based on a start point or end point of data corresponding to a second resource object, where the second resource object is a resource object satisfying a preset condition among all resource objects with corresponding data in a resource object combination scheduled by the target DCI; and
in a case that a target resource object scheduled or indicated by target DCI has no corresponding data or frequency domain resource allocation information corresponding to the target DCI is a target value, an arrangement order of the target resource object scheduled or indicated by the target DCI is an earliest one or a latest one; where
the target value is an invalid value or specific value, the target resource object is the first resource object or the preset resource object, and the resource object satisfying the preset condition includes any one of the following:
   a resource object with a smallest or largest identifier;
   a resource object with a smallest or largest index;
   a resource object corresponding to a specific identifier;
   a resource object with a smallest or largest SCS;
   a resource object corresponding to a specific SCS, a specific CP, or a specific waveform;
   a resource object with a largest blind detection times or a largest blind detection capability;
   a resource object with a largest DCI count limit or a largest scheduling times limit;
   a resource object with a largest or smallest terminal capability;
   a resource object with a least blind detection times or a least blind detection capability;
   a resource object with a smallest DCI count limit or smallest scheduling times limit;
   a resource object corresponding to dormancy indication information, enhanced type 3 codebook related information, or hybrid automatic repeat request acknowledgement HARQ-ACK retransmission related information; and
   a resource object corresponding to a DCI that has related HARQ-ACK but no corresponding data.

Optionally, a resource object corresponding to a DCI that has related HARQ-ACK but no corresponding data may be understood as a resource object corresponding to a DCI that schedules no data but has HARQ-ACK feedback information. For example, if a DCI indicates cell 0, or a DCI is sent on cell 0, but the DCI schedules no data and indicates other commands or information, the DCI may also have HARQ-ACK feedback and this DCI corresponds to cell 0.

In this embodiment of the present application, in a case that the first resource object or a preset resource object in the first resource object combination has no corresponding data, a second resource object is selected from resource objects with corresponding data, and ranking data of the target resource object is determined based on a start point or end point of data corresponding to the second resource object, which is simple in implementation an facilitates the understanding of the target order by the terminal and the network-side device.

Optionally, in a case that the first resource object is a resource object with a smallest identifier or a smallest index, an order based on the second resource object may be understood as an order based on data corresponding to a resource object that has corresponding data and that is a resource object with a smallest identifier or a smallest index among resource objects with corresponding data. The sorting may also be understood as: an order based on data corresponding to a second smallest identifier or a second smallest resource object index, and if the resource object with the second smallest identifier or the second smallest index has no corresponding data, an order based on data corresponding to the resource object with a third smallest identifier or a third smallest index, and so on, which is not repeated herein.

Optionally, the above specific value may be all 0s or all 1s.

It should be understood that the second resource object may be different from the first resource object and the preset resource object.

Optionally, in some embodiments, the order based on DCIs indicating or scheduling the first resource object includes at least one of the following:
a descending or ascending order of frequency domain of a DCI;
an order based on a size of a control channel element (Control Channel Element, CCE) index of a DCI;
an order based on a size of an identifier or index of a resource object combination scheduled by a DCI; and
an order based on a size of an identifier or index of a resource object set scheduled by a DCI.

In this embodiment of the present application, sorting is performed based on a frequency domain of a DCI, an identifier or index of a resource object combination scheduled by a DCI, and an identifier or index of a resource object set scheduled by a DCI, so that the target order may be simply and clearly determined, facilitating understanding of the target order by the terminal and the network-side device.

Optionally, a descending or ascending order of frequency domain of a DCI may be understood as any one of the following: an order based on a frequency domain of a DCI in descending order; and an order based on a frequency domain of the DCI in ascending order.

An order based on a size of an identifier or index of a resource object combination scheduled by a DCI may be understood as any one of the following: an order based on an identifier or index of a resource object combination scheduled by a DCI in ascending order; and an order based on an identifier or index of a resource object combination scheduled by a DCI in descending order.
an order based on a size of an identifier or index of a resource object set scheduled by a DCI may be understood as any one of the following: an order based on an identifier or index of a resource object set scheduled by a DCI in ascending order; and an order based on an identifier or index of a resource object set scheduled by a DCI in descending order.

Optionally, in some embodiments, the preset resource object includes any one of the following:
a reference resource object;
a resource object with a largest or smallest SCS;
a resource object with a largest or smallest identifier;
a resource object with a largest or smallest index;
a resource object with a largest or smallest identifier among resource objects with corresponding data; and
a resource object with a largest or smallest index among resource objects with corresponding data.

In this embodiment of the present application, since the definition of the preset resource object is clarified, the foregoing target order may be determined based on the preset resource object, so as to simplify understanding of the target order by the terminal and the network-side device and optimize a communication process of feedback information.

Optionally, in some embodiments, the first resource object combination is a resource object combination from at least two resource object combinations including the same first resource object.

In this embodiment of the present application, the number of first resource objects can be multiple, each first resource object including a corresponding first resource object combination. For example, in some embodiments, taking cells as an example, the following situation are assumed:
resource object combination 1 includes resource objects including cell 1, cell 2, and cell 3, where cell 1 is a first resource object;
resource object combination 2 includes resource objects including cell 1, cell 4, and cell 5, where cell 1 is a first resource object;
resource object combination 3 includes resource objects including cell 3, cell 4, and cell 5, where cell 3 is a first resource object; and
resource object combination 4 includes resource objects including cell 3, cell 4, and cell 6, where cell 3 is a first resource object.

In this case, first resource object combinations corresponding to cell 1 include resource object combination 1 and resource object combination 2; and first resource object combinations corresponding to cell 3 include resource object combination 3 and resource object combination 4.

It should be understood that an order based on a start point or end point of data corresponding to a preset resource object in a first resource object combination may be understood as: for first resource object combinations corresponding to cell 1, sorting is performed based on a start point or end point of data corresponding to a preset resource object in resource object combination 1 and resource object combination 2; and for first resource object combinations corresponding to cell 3, sorting is performed based on a start point or end point of data corresponding to a preset resource object in resource object combination 3 and resource object combination 4.

Optionally, in some embodiments, when a DCI schedules or indicates the first resource object, the first resource object is counted X times, or X DAI counts are performed for the first resource object; where
X is a ratio of an SCS of a reference resource object in a resource object set or resource object combination to an SCS of the first resource object.

It should be noted that, in this embodiment of the present application, a ratio of an SCS of a reference resource object in a resource object set or resource object combination to an SCS of the first resource object may also be represented by a ratio of SCS of the first resource object to SCS of a reference resource object in a resource object set or a resource object combination.

In this embodiment of the present application, when a DCI schedules or indicates the first resource object, the first resource object being counted X times, or X DAI counts being performed for the first resource object may be understood as: when one DCI schedules or indicates the first resource object, the first resource object is counted X times, or X DAI counts are performed for the first resource object. In this way, unified calculation can be performed for different SCS. For example, SCS of a reference resource object is 15 kHz, SCS of a first resource object is 30 kHz, and the restrictions corresponding to the reference resource object may be N1=1 and N2=1, so that the first resource object may be scheduled only once within one time unit. However, SCS of the first resource object corresponds to N1=2 and N2=2, so setting X=2 for each count can prevent the number of scheduling times of the first resource object from exceeding restrictions corresponding to the reference resource object. Alternatively, setting X=1/2 for each count can actually allow more scheduling times, thereby avoiding excessive scheduling restrictions.

Optionally, in some embodiments, the first resource object includes any one of the following:
a reference resource object;
a resource object corresponding to a target object;
a resource object corresponding to a target object among all resource objects with corresponding data in a resource object combination; and
a resource object corresponding to a DCI that has related HARQ-ACK but no corresponding data in the resource object combination; where
the resource object corresponding to the target object includes any one of the following:
   a resource object with a smallest or largest identifier;
   a resource object with a smallest or largest index;
   a resource object corresponding to a specific identifier;
   a resource object with a smallest or largest SCS;
   a resource object corresponding to a specific SCS, a specific CP, or a specific waveform;
   a resource object with a largest blind detection times or a largest blind detection capability;
   a resource object with a largest DCI count limit or a largest scheduling times limit;
   a resource object with a largest or smallest terminal capability;
   a resource object with a least blind detection times or a least blind detection capability;
   a resource object with a smallest DCI count limit or smallest scheduling times limit; and
   a resource object corresponding to dormancy indication information, enhanced type 3 codebook related information, or HARQ-ACK retransmission related information.

In this embodiment of the present application, since the definition of the first resource object is clarified, understanding of a target order by the terminal and the network-side device is facilitated, and consistency in understanding of the target feedback information is ensured.

Optionally, in some embodiments, the determining, by the terminal, target feedback information based on the target count includes:
determining, by the terminal, at least one of a position, order, and bit count of the target feedback information based on the target count.

In this embodiment of the present application, the first count may be understood as ${N}_{cells}^{DL}$ or ${N}_{cells , s et}^{DL , max}$; where ${N}_{cells}^{DL}$ and ${N}_{cells , s et}^{DL , max}$ represent a vector set composed of first resource objects to be traversed when feedback information is determined, and information such as the position, order, and number of the first resource object may be determined based on the ${N}_{cells}^{DL}$ and ${N}_{cells , s et}^{DL , max}$.

Optionally, in some embodiments, the determining, by the terminal, target feedback information based on the target count includes:
determining, by the terminal, a first resource object set based on the target count; and
determining, by the terminal, at least one of a position, order, and bit count of the target feedback information based on the first resource object set.

In this embodiment of the present application, the first resource object set may be understood as a set of all first resource objects for which feedback information needs to be sent.

Optionally, when a first resource object set is determined based on the first count, ${N}_{cells}^{DL}$ or ${N}_{cells , s et}^{DL , max}$ may be set as the first resource object set.

Optionally, in some embodiments, resource objects in the first resource object set are sorted based on first information, and the first information includes any one of the following: identifier, index, SCS, blind detection times, blind detection capability, DCI count limit corresponding to the resource object, DCI scheduling times limit corresponding to the resource object, and terminal capability corresponding to the resource object.

Optionally, within the first resource object set, sorting may be performed in ascending or descending order of identifiers (such as cell identifiers).

Optionally, within the first resource object set, sorting may be performed in ascending or descending order of indexes (such as cell indexes).

Optionally, a manner of determining the number of resource objects included in the foregoing first resource object may be set according to actual needs. For example, in some embodiments, the number of resource objects included in the first resource object set is determined based on any one of the following:
the number of resource objects in a resource object set including a largest number of resource objects;
the number of first resource objects in a resource object set including a largest number of first resource objects; and
the number of first resource objects in a resource object combination.

For better understanding of the present application, the following describes some examples.

In this embodiment of the present application, description is made by using an example in which a resource object is a cell.

In some embodiments, when ${N}_{cells}^{DL}$ or ${N}_{cells , s et}^{DL , max}$ is calculated, a specific cell (such as the first resource object) is counted N times; or during DAI counting, DAI counting is performed N times for the specific cell (for example, increased N times, possible modulo exists), where N≥1.

N is at least one of the following:
(for one time unit) a DCI count limit, scheduling times limit, or terminal capability for one cell, one cell combination, and the specific cell;
(for one time unit) a total DCI count limit, total scheduling times limit, or terminal capability for a cell set and any one of one cell, one cell combination, and the specific cell;
(for one time unit) the number of times that the specific cell is scheduled;
(for one time unit) the number of times that the specific cell is scheduled or indicated;
(for one time unit) the number of DCIs scheduling or indicating the specific cell;
(for one time unit) the number of DCIs including information (such as DCI field) corresponding to the specific cell; and
(for one time unit) the number of data scheduled or received corresponding to the specific cell.

Optionally, the target arrangement order of at least one of N counts corresponding to the specific cell, N DCIs corresponding to the specific cell, N scheduling operations corresponding to the specific cell, and feedback information associated with N scheduling operations corresponding to the specific cell includes any one of the following:
1. an order based on an order of a start point or end point of data corresponding to the specific cell;
2. an order based on an order of an earliest start point, earliest end point, latest start point, or latest end point of all data corresponding to the specific cell combination (such as the above first resource object combination);
3. an order based on an order of a start point or end point of data corresponding to the preset cell in each specific combination;
4. an order based on a high-low order of frequency domain resources of a DCI indicating or scheduling the specific cell, a size of the control channel element CCE index of the DCI, a size of a cell combination index (cell combination index) scheduled by the DCI, an order of a cell set index (cell set index) scheduled, and the like; and
5. an order based on a cell identifier of a cell in the specific cell combination.

For items 1 and 3 above, in a DCI scheduling or indicating the specific cell, if the specific cell has no corresponding data, sorting is based on any one of the following data:
data corresponding to a cell with a smallest identifier among cells with corresponding data;
data corresponding to a cell with a second smallest identifier (if there is also no data, data corresponding to a cell with a third smallest identifier, and so on); and
if there is an invalid (invalid) PDSCH or no corresponding data, a start point (starting point) of the invalid PDSCH is considered as an earliest one, or the DCI is counted (counting) first. Alternatively, conversely, the start point is considered as a latest one, and the DCI is counted later. In this embodiment, the terminal assumes or expects that, among the specific cell combinations corresponding to the same specific cell, only a specific cell in one specific cell combination has invalid (invalid) PDSCH or no corresponding data.

Optionally, the above preset cell is a cell with a largest SCS, a smallest SCS, a largest id, or a largest id among cells with data in a cell combination.

Optionally, the above preset cell may be a reference cell.

Optionally, item 5 above may be understood as an order based on the second smallest cell identifier, if the second smallest cell identifiers are also the same, an order based on the third smallest cell identifier, and so on. For example, if the cell identifiers with the smallest IDs are the same, refer to cell identifiers with the second smallest IDs, and if the cell identifiers with the second smallest IDs are still the same, refer to the third smallest cell identifiers, and so on.

For example, during DAI counting, a combination (cell 1, cell 2, cell 3) is ranked before a combination (cell 1, cell 2, cell 4).

Optionally, in some embodiments, the specific cell combination may be understood as a cell combination including the specific cell, and the specific cell is a cell with a smallest cell identifier in the cell combination.

Optionally, in some embodiments, the specific cell in the specific cell combination has corresponding data. The specific cell combination may be understood as a cell combination including the specific cell, where the specific cell is a cell with the smallest cell identifier in the cell combination, and the specific cell has corresponding data.

Optionally, in some embodiments, the definition of the specific cell may include any one of the following:
a cell that has corresponding data and has a smallest cell identifier in a cell combination;
a cell with a smallest cell identifier in a cell combination; and
a reference cell corresponding to a cell combination or a cell set.

Optionally, the terminal may determine the target feedback information based on ${N}_{cells}^{DL}$ or ${N}_{cells , s et}^{DL , max}$ or DAI sorting.

Optionally, in some embodiments, during counting, when one DCI schedules or indicates a specific cell, the specific cell is counted X times, or X DAI counts are performed for the specific cell, where X is a ratio of SCS of a reference cell in a cell set or a cell combination to SCS of the specific cell.

Optionally, in some embodiments, the terminal may determine a specific cell set (first resource object set), and determine the target feedback information based on the specific cell set.

The specific cell set includes a specific cell, where the specific cell is a cell with a smallest cell identifier in a cell combination, and the specific cell set may be a set composed of cells with the smallest cell identifiers in cell combinations of all cell sets. A method for determining the specific cell set or definition of the specific cell set is: a set composed of cells with the smallest cell ids in all cell combinations of all cell sets (that is, without defining the concept of a specific cell); and a set composed of all cells in all cell sets.

Optionally, cells in the specific cell set are sorted in ascending or descending order of cell identifiers.

Optionally, corresponding feedback information may be determined respectively based on cell identifiers corresponding to cells in the specific cell set in ascending or descending order.

Optionally, in some embodiments, the number of cells included in ${N}_{cells , s et}^{DL , max}$ may be determined based on the number of cells in a cell set including a largest number of cells among all cell sets. In addition, if a same specific cell, or a cell that is a cell with a smallest index in one or more cell combinations, is scheduled N times within one monitoring occasion, the cell needs to be counted N times during ${N}_{cells , s et}^{DL , max}$ calculation. Further optionally, these N times are sorted based on an order of a start point of a PDSCH scheduled for the cell.

Optionally, in some embodiments, the number of cells included in ${N}_{cells , s et}^{DL , max}$ may be determined based on the number of cells in a cell set including a largest number of cells among all cell sets, or determined based on the number of specific cells in a cell set including a largest number of specific cells among all cell sets.

For example, cell set 0: cell 0, cell 1, cell 2, and cell 3, which support cell combinations including cell 0 and cell 1, cell 0, cell 1, and cell 2, and cell 0, cell 1, and cell 3. Therefore, the cell set has only one specific cell, namely cell 0.

For example, cell set 1: cell 4, cell 5, cell 6, and cell 7, which support cell combinations including cell 4 and cell, cell 6 and cell 7, and cell 5 and cell 7. Therefore, specific cells of this cell set are cell 4, cell 5, and cell 6.

Therefore, the number of cells included in ${N}_{cells , s et}^{DL , max}$ may be determined based on 3 specific cells in cell set 1, that is, the number of cells included in ${N}_{cells , s et}^{DL , max}$ is 3.

Optionally, in some embodiments, ${N}_{cells , s et}^{DL , max}$ may be determined based on a specific cell in a cell set including a largest number of specific cells among all cell sets.

For example, cell set 0: cell 0, cell 1, cell 2, and cell 3, which support cell combinations including cell 0 and cell 1, cell 0, cell 1, and cell 2, and cell 0, cell 1, and cell 3. Therefore, the cell set has only one specific cell, namely cell 0.

For example, cell set 1: cell 4, cell 5, cell 6, and cell 7, which support cell combinations including cell 4 and cell, cell 6 and cell 7, and cell 5 and cell 7. Therefore, specific cells of this cell set are cell 4, cell 5, and cell 6.

Therefore, the number of cells included in ${N}_{cells , s et}^{DL , max}$ may be determined based on the number of specific cells in cell set 1, that is, the cells included in ${N}_{cells , s et}^{DL , max}$ are cell 4, cell 5, and cell 6.

Optionally, in some embodiments, ${N}_{cells , s et}^{DL , max}$ may be determined based on specific cells included in all cell sets.

For example, cell set 0: cell 0, cell 1, cell 2, and cell 3, which support cell combinations including cell 0 and cell 1, cell 0, cell 1, and cell 2, and cell 0, cell 1, and cell 3. Therefore, the cell set has only one specific cell, namely cell 0.

For example, cell set 1: cell 4, cell 5, cell 6, and cell 7, which support cell combinations including cell 4 and cell, cell 6 and cell 7, and cell 5 and cell 7. Therefore, specific cells of this cell set are cell 4, cell 5, and cell 6.

Therefore, the number of cells included in ${N}_{cells , s et}^{DL , max}$ may be determined based on the number of specific cells in cell set 0 and cell set 1, that is, the number of cells included in ${N}_{cells , s et}^{DL , max}$ is 4, namely cell 0, cell 4, cell 5, and cell 6.

Referring to FIG. 3, an embodiment of the present application further provides a resource scheduling processing method. As shown in FIG. 3, the resource scheduling processing method includes the following step.

Step 301. A network-side device sends at least one of downlink control information DCI and a downlink assignment index DAI associated with DCI to a terminal, where the DCI is used for scheduling a resource object combination, and the resource object combination includes a first resource object; and
the first resource object is counted N times, or DAI counting is performed N times for the first resource object; where
N is an integer greater than 1, or the number of times that the first resource object is scheduled or indicated does not exceed 1.

In this embodiment of the present application, since the manner of performing DAI counting for the first resource object and the manner of calculating the first resource object in the process of determining feedback information are clarified, consistency in understanding of feedback information between the terminal and the network-side device can be ensured.

Optionally, in a case that N is greater than 1, N includes at least one of the following:
a DCI count limit, scheduling times limit, or terminal capability corresponding to a first object, where the first object is one resource object, one resource object combination, or the first resource object;
a DCI count limit, scheduling times limit, or terminal capability corresponding to a second object, where the second object includes a resource object set and any one of the following: one resource object, one resource object combination, and the first resource object; and
a DCI count limit, scheduling times limit, or terminal capability corresponding to a third object, where the third object includes a resource object set;
the number of times that the first resource object is scheduled or indicated; the number of DCIs scheduling or indicating the first resource object;
the number of DCIs including an information field corresponding to the first resource object; and
the number of data scheduled or received on the first resource object.

Optionally, a target arrangement order of at least one of N counts corresponding to the first resource object, N DCIs corresponding to the first resource object, N indications or scheduling operations corresponding to the first resource object, and feedback information associated with N indications or scheduling operations corresponding to the first resource object includes any one of the following:
sorting based on a start point or end point of data on the first resource object; an order based on an earliest start point, earliest end point, latest start point, or latest end point of all data corresponding to the first resource object combination;
an order based on a start point or end point of data corresponding to a preset resource object in the first resource object combination;
an order based on DCIs indicating or scheduling the first resource object; and
an order based on first information of resource objects in the first resource object combination, where the first information includes at least one of the following: identifier, index, SCS, blind detection times, blind detection capability, DCI count limit corresponding to the resource object, DCI scheduling times limit corresponding to the resource object, and terminal capability corresponding to the resource object.

Optionally, in a case that the target arrangement order is an order based on a start point or end point of data corresponding to a first resource object or an order based on a start point or end point of data corresponding to a preset resource object in the first resource object combination, the target arrangement order satisfies any one of the following:
in a case that a target resource object scheduled or indicated by target DCI has no corresponding data, ranking data of the target resource object is determined based on a start point or end point of data corresponding to a second resource object, where the second resource object is a resource object satisfying a preset condition among all resource objects with corresponding data in a resource object combination scheduled by the target DCI; and
in a case that a target resource object scheduled or indicated by target DCI has no corresponding data or frequency domain resource allocation information corresponding to the target DCI is a target value, an arrangement order of the target resource object scheduled or indicated by the target DCI is an earliest one or a latest one; where
the target value is an invalid value or specific value, the target resource object is the first resource object or the preset resource object, and the resource object satisfying the preset condition includes any one of the following:
   a resource object with a smallest or largest identifier;
   a resource object with a smallest or largest index;
   a resource object corresponding to a specific identifier;
   a resource object with a smallest or largest SCS;
   a resource object corresponding to a specific SCS, a specific CP, or a specific waveform;
   a resource object with a largest blind detection times or a largest blind detection capability;
   a resource object with a largest DCI count limit or a largest scheduling times limit;
   a resource object with a largest or smallest terminal capability;
   a resource object with a least blind detection times or a least blind detection capability;
   a resource object with a smallest DCI count limit or smallest scheduling times limit;
   a resource object corresponding to dormancy indication information, enhanced type 3 codebook related information, or hybrid automatic repeat request acknowledgement HARQ-ACK retransmission related information; and
   a resource object corresponding to a DCI that has related HARQ-ACK but no corresponding data.

Optionally, the order based on DCIs indicating or scheduling the first resource object includes at least one of the following:
a descending or ascending order of frequency domain of a DCI;
an order based on a size of a control channel element index of a DCI;
an order based on a size of an identifier or index of a resource object combination scheduled by a DCI; and
an order based on a size of an identifier or index of a resource object set scheduled by a DCI.

Optionally, the preset resource object includes any one of the following:
a reference resource object;
a resource object with a largest or smallest SCS;
a resource object with a largest or smallest identifier;
a resource object with a largest or smallest index;
a resource object with a largest or smallest identifier among resource objects with corresponding data; and
a resource object with a largest or smallest index among resource objects with corresponding data.

Optionally, the first resource object combination is a resource object combination from at least two resource object combinations including the same first resource object.

Optionally, when a DCI schedules or indicates the first resource object, the first resource object is counted X times, or X DAI counts are performed for the first resource object; where
X is a ratio of an SCS of a reference resource object in a resource object set or resource object combination to an SCS of the first resource object.

Optionally, the first resource object includes any one of the following:
a reference resource object;
a resource object corresponding to a target object;
a resource object corresponding to a target object among all resource objects with corresponding data in a resource object combination; and
a resource object corresponding to a DCI that has related HARQ-ACK but no corresponding data in the resource object combination; where
the resource object corresponding to the target object includes any one of the following:
   a resource object with a smallest or largest identifier;
   a resource object with a smallest or largest index;
   a resource object corresponding to a specific identifier;
   a resource object with a smallest or largest SCS;
   a resource object corresponding to a specific SCS, a specific CP, or a specific waveform;
   a resource object with a largest blind detection times or a largest blind detection capability;
   a resource object with a largest DCI count limit or a largest scheduling times limit;
   a resource object with a largest or smallest terminal capability;
   a resource object with a least blind detection times or a least blind detection capability;
   a resource object with a smallest DCI count limit or smallest scheduling times limit; and
   a resource object corresponding to dormancy indication information, enhanced type 3 codebook related information, or HARQ-ACK retransmission related information.

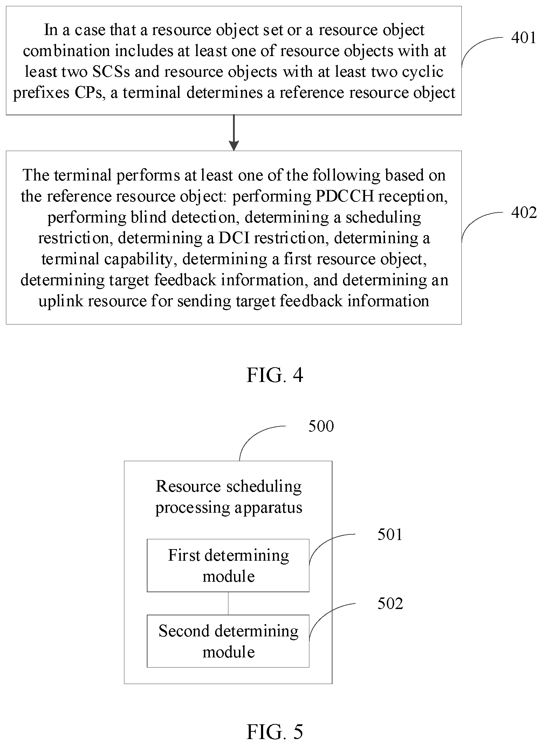

Referring to FIG. 4, an embodiment of the present application further provides a reference resource object determining method. As shown in FIG. 4, the reference resource object determining method includes the following steps.

Step 401. In a case that a resource object set or a resource object combination includes at least one of resource objects with at least two SCSs and resource objects with at least two cyclic prefixes CPs, a terminal determines a reference resource object.

Step 402. The terminal performs at least one of the following based on the reference resource object: performing PDCCH reception, performing blind detection, determining a scheduling restriction, determining a DCI restriction, determining a terminal capability, determining a first resource object, determining target feedback information, and determining an uplink resource for sending target feedback information.

In an example of the present application, in a case that a resource object set or a resource object combination includes at least one of resource objects with at least two SCSs and resource objects with at least two cyclic prefixes CPs, the terminal determines a reference resource object, and performs related operations based on the reference resource object, thereby improving the DCI processing capability, that is, supporting DCI scheduling for resource objects with multiple different SCS and/or cyclic prefixes CPs, and avoiding the problem that DCI scheduling is restricted due to different SCS. Optionally, in some embodiments, each type of cyclic prefix may correspond to one SCS.

In some embodiments, the resource object combination may include one or more resource objects. The resource object may be understood as a cell, a carrier, a frequency domain resource, a resource set, a subchannel, a resource pool, a bandwidth part (Bandwidth Part, BWP), or a resource block set (Resource Block set, RB set). The first resource object may be understood as or replaced with a specific resource object, such as a specific cell.

Optionally, in some embodiments, the reference resource object satisfies any one of the following:
in a case that there is one reference resource object per resource object set, the reference resource object is a resource object corresponding to a target object in the resource object set; and
in a case that there is one reference resource object per M resource object sets, the reference resource object is a resource object corresponding to a target object in the M resource object sets; where
the resource object corresponding to the target object includes any one of the following:
   a resource object with a smallest or largest identifier;
   a resource object with a smallest or largest index;
   a resource object corresponding to a specific identifier;
   a resource object with a smallest or largest SCS;
   a resource object corresponding to a specific SCS, a specific CP, or a specific waveform;
   a resource object with a largest blind detection times or a largest blind detection capability;
   a resource object with a largest DCI count limit or a largest scheduling times;
   a resource object with a largest or smallest terminal capability;
   a resource object with a least blind detection times or a least blind detection capability;
   a resource object with a smallest DCI count limit or smallest scheduling times limit; and
   a resource object corresponding to dormancy indication information, enhanced type 3 codebook related information, or hybrid automatic repeat request acknowledgement HARQ-ACK retransmission related information.

In this embodiment of the present application, since the definition of the reference resource object is clarified, DCI processing capability and feedback information generation of the terminal and the network-side device can be aligned, optimizing a communication process.

Optionally, in some embodiments, the reference resource object satisfies at least one of the following:
the reference resource object and the first resource object are a same resource object;
the reference resource object and the first resource object have a same identifier or index;
the reference resource object and the first resource object have a same SCS; the reference resource object and the first resource object have a same CP;
An SCS of the reference resource object is greater than or equal to an SCS of the first resource object;
a product of a ratio X of an SCS of the reference resource object to an SCS of the first resource object and Y is greater than or equal to N;
a ratio X of an SCS of the reference resource object to an SCS of the first resource object is less than or equal to a quotient of N divided by Y; where N includes any one of the following: counting times corresponding to the first resource object; times that the first resource object is counted in the process of determining the target feedback information or codebook; or times that the first resource object is repeatedly counted in the process of determining a resource object set corresponding to the target feedback information or codebook; and
the first resource object is a resource object indicated or scheduled by DCI, Y represents a DCI count limit, scheduling times limit, or terminal capability corresponding to a first object, and the first object is one resource object, one resource object combination, one resource object set, or the first resource object.

Optionally, in some embodiments, when a DCI schedules or indicates the first resource object, the first resource object is counted X times, or X DAI counts are performed for the first resource object.

It should be noted that, in this embodiment of the present application, a ratio of an SCS of a reference resource object in a resource object set or resource object combination to an SCS of the first resource object may also be represented by a ratio of SCS of the first resource object to SCS of a reference resource object in a resource object set or a resource object combination.

In this embodiment of the present application, when a DCI schedules or indicates the first resource object, the first resource object being counted X times, or X DAI counts being performed for the first resource object may be understood as: when one DCI schedules or indicates the first resource object, the first resource object is counted X times, or X DAI counts are performed for the first resource object. In this way, unified calculation can be performed for different SCS. For example, SCS of a reference resource object is 15 kHz, SCS of a first resource object is 30 kHz, and the restrictions corresponding to the reference resource object may be N1=1 and N2=1, so that the first resource object may be scheduled only once within one time unit. However, SCS of the first resource object corresponds to N1=2 and N2=2, so setting X=2 for each count can prevent the number of scheduling times of the first resource object from exceeding restrictions corresponding to the reference resource object. Alternatively, setting X=1/2 for each count can actually allow more scheduling times, thereby avoiding excessive scheduling restrictions.

Optionally, the reference resource object satisfying the foregoing condition restrictions can be understood as that, for a resource object set, the reference resource object satisfies the foregoing condition restrictions, or for a resource object combination, the reference resource object satisfies the foregoing condition restrictions.

Further, configuration can ensure or the terminal expects that the reference resource object satisfies the foregoing condition restrictions.

Optionally, in some embodiments, configuration can also avoid or the terminal does not expect that the reference resource object satisfies at least one of the following:
the reference resource object and the first resource object are different resource objects;
the reference resource object and the first resource object do not have a same identifier or index;
the reference resource object and the first resource object do not have a same SCS;
the reference resource object and the first resource object do not have a same CP;
an SCS of the reference resource object is less than an SCS of the first resource object;
a product of a ratio X of an SCS of the reference resource object to an SCS of the first resource object and Y is less than N; and
a ratio X of an SCS of the reference resource object to an SCS of the first resource object is greater than a quotient of N divided by Y.

For better understanding of the present application, the following describes some examples.

In this embodiment of the present application, description is made by using an example in which a resource object is a cell.

For the case where at least two SCSs and/or at least two CPs exist in a cell set or cell combination, when defining or configuring the reference cell, the following restrictions need to be satisfied:
1. a reference cell is determined per (per) cell combination; optionally, for one cell combination, the reference cell is a cell with a smallest cell id in the cell combination;
2. a reference cell is determined per M cell combinations, and the cell with the smallest cell id in these M cell combinations is the same cell, optionally, the reference cell is the cell with the smallest cell id in the M cell combinations, that is, the cell with the smallest cell id in these M cell combinations and the reference cell are the same cell; and
3. a reference cell is the cell with a largest SCS or a smallest SCS in the cell set.

Optionally, configuration ensures or the terminal expects that: for one cell set or cell combination, a corresponding reference cell matches a specific cell. The matching may be interpreted as at least one of the following:
the reference cell and the specific cell are a same cell;
the reference cell and the specific cell have a same identifier or index;
the reference cell and the specific cell have a same SCS;
the reference cell and the specific cell have a same CP;
SCS of the reference cell is greater than or equal to SCS of the specific cell;
a product of a ratio X of an SCS of the reference cell to an SCS of the specific cell and Y is greater than or equal to N; and
a ratio X of an SCS of the reference cell to an SCS of the specific cell is less than or equal to a quotient of N divided by Y; where
N includes any one of the following: counting times corresponding to the specific cell; times that the specific cell is counted in the process of determining the target feedback information or codebook; or times that the specific cell is repeatedly counted in the process of determining the cell set corresponding to the target feedback information or codebook; and
the specific cell is one cell in the cell combination scheduled by DCI, Y represents a DCI count limit, scheduling times limit, or terminal capability corresponding to a first object, and the first object is one cell, one cell combination, one cell set, or the specific cell.

Optionally, configuration avoids or the terminal does not expect that: for one cell set or cell combination, the corresponding reference cell and specific cell satisfy at least one of the following:
the reference cell and the specific cell are different cells;
the reference cell and the specific cell do not have a same identifier or index;
the reference cell and the specific cell do not have a same SCS;
the reference cell and the specific cell do not have a same CP;
SCS of the reference cell is less than SCS of the specific cell;
a product of a ratio X of an SCS of the reference cell to an SCS of the specific cell and Y is less than N; and
a ratio X of an SCS of the reference cell to an SCS of the specific cell is greater than a quotient of N divided by Y; where
N includes any one of the following: counting times corresponding to the specific cell; times that the specific cell is counted in the process of determining the target feedback information or codebook; or times that the specific cell is repeatedly counted in the process of determining the cell set corresponding to the target feedback information or codebook; and
the specific cell is one cell in the cell combination scheduled by DCI, Y represents a DCI count limit, scheduling times limit, or terminal capability corresponding to a first object, and the first object is one cell, one cell combination, one cell set, or the specific cell.

The resource scheduling processing method according to the embodiments of the present application may be executed by a resource scheduling processing apparatus. In the embodiments of the present application, the resource scheduling processing apparatus executing the resource scheduling processing method is taken as an example to explain the resource scheduling processing apparatus according to the embodiments of the present application.

Referring to FIG. 5, an embodiment of the present application provides a resource scheduling processing apparatus. As shown in FIG. 5, the resource scheduling processing apparatus 500 includes:
a first determining module 501, configured to determine a target count, where the target count includes any one of the following: a first count of a first resource object, the first count satisfying that the first resource object is counted N times; and a second count of a downlink assignment index DAI for the first resource object, the second count satisfying that DAI counting is performed N times for the first resource object; and
a second determining module 502, configured to determine target feedback information based on the target count; where
the first resource object is a resource object indicated or scheduled by downlink control information DCI, N is an integer greater than 1, or the number of times that the first resource object is scheduled or indicated does not exceed 1.

Optionally, in a case that N is greater than 1, N includes at least one of the following:
a DCI count limit, scheduling times limit, or terminal capability corresponding to a first object, where the first object is one resource object, one resource object combination, or the first resource object;
a DCI count limit, scheduling times limit, or terminal capability corresponding to a second object, where the second object includes a resource object set and any one of the following: one resource object, one resource object combination, and the first resource object; and
a DCI count limit, scheduling times limit, or terminal capability corresponding to a third object, where the third object includes a resource object set;
the number of times that the first resource object is scheduled or indicated;
the number of DCIs scheduling or indicating the first resource object;
the number of DCIs including an information field corresponding to the first resource object; and
the number of data scheduled or received on the first resource object.

Optionally, a target arrangement order of at least one of N counts corresponding to the first resource object, N DCIs corresponding to the first resource object, N indications or scheduling operations corresponding to the first resource object, and feedback information associated with N indications or scheduling operations corresponding to the first resource object includes any one of the following:
sorting based on a start point or end point of data on the first resource object;
an order based on an earliest start point, earliest end point, latest start point, or latest end point of all data corresponding to the first resource object combination;
an order based on a start point or end point of data corresponding to a preset resource object in the first resource object combination;
an order based on DCIs indicating or scheduling the first resource object; and
an order based on first information of resource objects in the first resource object combination, where the first information includes at least one of the following: identifier, index, SCS, blind detection times, blind detection capability, DCI count limit corresponding to the resource object, DCI scheduling times limit corresponding to the resource object, and terminal capability corresponding to the resource object.

Optionally, in a case that the target arrangement order is an order based on a start point or end point of data corresponding to a first resource object or an order based on a start point or end point of data corresponding to a preset resource object in the first resource object combination, the target arrangement order satisfies any one of the following:
in a case that a target resource object scheduled or indicated by target DCI has no corresponding data, ranking data of the target resource object is determined based on a start point or end point of data corresponding to a second resource object, where the second resource object is a resource object satisfying a preset condition among all resource objects with corresponding data in a resource object combination scheduled by the target DCI; and
in a case that a target resource object scheduled or indicated by target DCI has no corresponding data or frequency domain resource allocation information corresponding to the target DCI is a target value, an arrangement order of the target resource object scheduled or indicated by the target DCI is an earliest one or a latest one; where
the target value is an invalid value or specific value, the target resource object is the first resource object or the preset resource object, and the resource object satisfying the preset condition includes any one of the following:
   a resource object with a smallest or largest identifier;
   a resource object with a smallest or largest index;
   a resource object corresponding to a specific identifier;
   a resource object with a smallest or largest SCS;
   a resource object corresponding to a specific SCS, a specific CP, or a specific waveform;
   a resource object with a largest blind detection times or a largest blind detection capability;
   a resource object with a largest DCI count limit or a largest scheduling times limit;
   a resource object with a largest or smallest terminal capability;
   a resource object with a least blind detection times or a least blind detection capability;
   a resource object with a smallest DCI count limit or smallest scheduling times limit;
   a resource object corresponding to dormancy indication information, enhanced type 3 codebook related information, or hybrid automatic repeat request acknowledgement HARQ-ACK retransmission related information; and
   a resource object corresponding to a DCI that has related HARQ-ACK but no corresponding data.

Optionally, the order based on DCIs indicating or scheduling the first resource object includes at least one of the following:
a descending or ascending order of frequency domain of a DCI;
an order based on a size of a control channel element index of a DCI;
an order based on a size of an identifier or index of a resource object combination scheduled by a DCI; and
an order based on a size of an identifier or index of a resource object set scheduled by a DCI.

Optionally, the preset resource object includes any one of the following:
a reference resource object;
a resource object with a largest or smallest SCS;
a resource object with a largest or smallest identifier;
a resource object with a largest or smallest index;
a resource object with a largest or smallest identifier among resource objects with corresponding data; and
a resource object with a largest or smallest index among resource objects with corresponding data.

Optionally, the first resource object combination is a resource object combination from at least two resource object combinations including the same first resource object.

Optionally, when a DCI schedules or indicates the first resource object, the first resource object is counted X times, or X DAI counts are performed for the first resource object; where
X is a ratio of an SCS of a reference resource object in a resource object set or resource object combination to an SCS of the first resource object.

Optionally, the first resource object includes any one of the following:
a reference resource object;
a resource object corresponding to a target object;
a resource object corresponding to a target object among all resource objects with corresponding data in a resource object combination;
a resource object corresponding to a DCI that has related HARQ-ACK but no corresponding data in the resource object combination; where the resource object corresponding to the target object includes any one of the following:
   a resource object with a smallest or largest identifier;
   a resource object with a smallest or largest index;
   a resource object corresponding to a specific identifier;
   a resource object with a smallest or largest SCS;
   a resource object corresponding to a specific SCS, a specific CP, or a specific waveform;
   a resource object with a largest blind detection times or a largest blind detection capability;
   a resource object with a largest DCI count limit or a largest scheduling times limit;
   a resource object with a largest or smallest terminal capability;
   a resource object with a least blind detection times or a least blind detection capability;
   a resource object with a smallest DCI count limit or smallest scheduling times limit; and
   a resource object corresponding to dormancy indication information, enhanced type 3 codebook related information, or HARQ-ACK retransmission related information.

Optionally, the second determining module 502 is specifically configured to:
determine at least one of a position, order, and bit count of the target feedback information based on the target count.

Optionally, the second determining module 502 is specifically configured to:
determine a first resource object set based on the target count; and
determine at least one of a position, order, and bit count of the target feedback information based on the first resource object set.

Optionally, the first resource object set includes at least one of the following:
a set composed of resource objects corresponding to a target object in all resource object combinations of all resource object sets;
a set composed of objects in all resource object combinations of all resource object sets; and
a set of all first resource objects in all resource object sets; where
the first resource object includes any one of the following: a reference resource object; a resource object corresponding to a target object; a resource object corresponding to a target object among all resource objects with corresponding data in a resource object combination; and a resource object corresponding to a DCI that has related HARQ-ACK but no corresponding data in the resource object combination; where
the resource object corresponding to the target object includes any one of the following:
   a resource object with a smallest or largest identifier;
   a resource object with a smallest or largest index;
   a resource object corresponding to a specific identifier;
   a resource object with a smallest or largest SCS;
   a resource object corresponding to a specific SCS, a specific CP, or a specific waveform;
   a resource object with a largest blind detection times or a largest blind detection capability;
   a resource object with a largest DCI count limit or scheduling times limit;
   a resource object with a largest or smallest terminal capability;
   a resource object with a least blind detection times or a least blind detection capability;
   a resource object with a smallest DCI count limit or scheduling times limit; and
   a resource object corresponding to dormancy indication information, enhanced type 3 codebook related information, or HARQ-ACK retransmission related information.

Optionally, the determining at least one of a position, order, and bit count of the target feedback information based on the first resource object set includes at least one of the following:
determining, by the terminal, the order or position of the target feedback information based on the sorting or position of resource objects in the first resource object set; and
determining, by the terminal, the bit count of the target feedback information based on the number of resource objects in the first resource object set.

Optionally, resource objects in the first resource object set are sorted based on first information, where the first information includes any one of the following: identifier, index, SCS, blind detection times, blind detection capability, DCI count limit corresponding to the resource object, DCI scheduling times limit corresponding to the resource object, and terminal capability corresponding to the resource object.

Optionally, the number of resource objects included in the first resource object set is determined based on any one of the following:
the number of resource objects in a resource object set including a largest number of resource objects;
the number of first resource objects in a resource object set including a largest number of first resource objects; and
the number of first resource objects in a resource object combination.

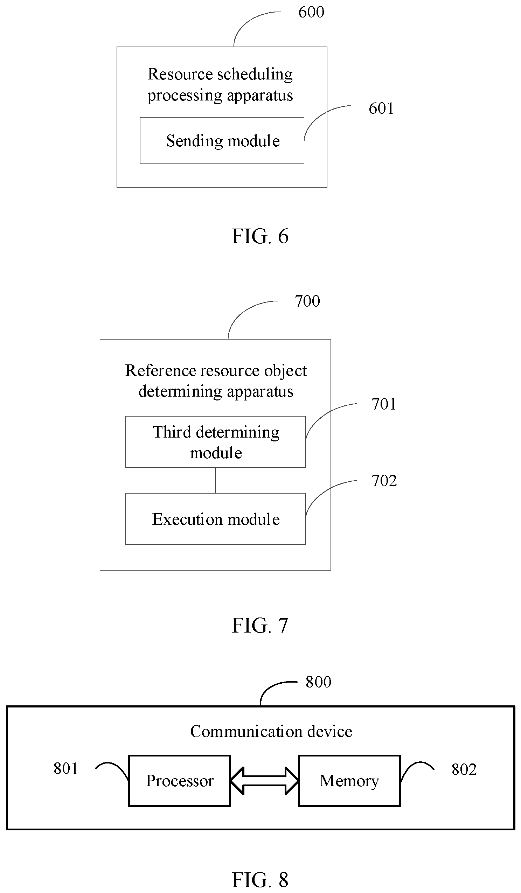

Referring to FIG. 6, an embodiment of the present application provides a resource scheduling processing apparatus. As shown in FIG. 6, the resource scheduling processing apparatus 600 includes:
a sending module 601, configured to send at least one of downlink control information DCI and a downlink assignment index DAI associated with DCI to a terminal, where the DCI is used for scheduling a resource object combination, and the resource object combination includes a first resource object; and
the first resource object is counted N times, or DAI counting is performed N times for the first resource object; where
N is an integer greater than 1, or the number of times that the first resource object is scheduled or indicated does not exceed 1.

Optionally, in a case that N is greater than 1, N includes at least one of the following:
a DCI count limit, scheduling times limit, or terminal capability corresponding to a first object, where the first object is one resource object, one resource object combination, or the first resource object;
a DCI count limit, scheduling times limit, or terminal capability corresponding to a second object, where the second object includes a resource object set and any one of the following: one resource object, one resource object combination, and the first resource object; and
a DCI count limit, scheduling times limit, or terminal capability corresponding to a third object, where the third object includes a resource object set;
the number of times that the first resource object is scheduled or indicated;
the number of DCIs scheduling or indicating the first resource object;
the number of DCIs including an information field corresponding to the first resource object; and
the number of data scheduled or received on the first resource object.

Optionally, a target arrangement order of at least one of N counts corresponding to the first resource object, N DCIs corresponding to the first resource object, N indications or scheduling operations corresponding to the first resource object, and feedback information associated with N indications or scheduling operations corresponding to the first resource object includes any one of the following:
sorting based on a start point or end point of data on the first resource object;
an order based on an earliest start point, earliest end point, latest start point, or latest end point of all data corresponding to the first resource object combination;
an order based on a start point or end point of data corresponding to a preset resource object in the first resource object combination;
an order based on DCIs indicating or scheduling the first resource object; and
an order based on first information of resource objects in the first resource object combination, where the first information includes at least one of the following: identifier, index, SCS, blind detection times, blind detection capability, DCI count limit corresponding to the resource object, DCI scheduling times limit corresponding to the resource object, and terminal capability corresponding to the resource object.

Optionally, in a case that the target arrangement order is an order based on a start point or end point of data corresponding to a first resource object or an order based on a start point or end point of data corresponding to a preset resource object in the first resource object combination, the target arrangement order satisfies any one of the following:
in a case that a target resource object scheduled or indicated by target DCI has no corresponding data, ranking data of the target resource object is determined based on a start point or end point of data corresponding to a second resource object, where the second resource object is a resource object satisfying a preset condition among all resource objects with corresponding data in a resource object combination scheduled by the target DCI; and
in a case that a target resource object scheduled or indicated by target DCI has no corresponding data or frequency domain resource allocation information corresponding to the target DCI is a target value, an arrangement order of the target resource object scheduled or indicated by the target DCI is an earliest one or a latest one; where
the target value is an invalid value or specific value, the target resource object is the first resource object or the preset resource object, and the resource object satisfying the preset condition includes any one of the following:
   a resource object with a smallest or largest identifier;
   a resource object with a smallest or largest index;
   a resource object corresponding to a specific identifier;
   a resource object with a smallest or largest SCS;
   a resource object corresponding to a specific SCS, a specific CP, or a specific waveform;
   a resource object with a largest blind detection times or a largest blind detection capability;
   a resource object with a largest DCI count limit or a largest scheduling times limit;
   a resource object with a largest or smallest terminal capability;
   a resource object with a least blind detection times or a least blind detection capability;
   a resource object with a smallest DCI count limit or smallest scheduling times limit;
   a resource object corresponding to dormancy indication information, enhanced type 3 codebook related information, or hybrid automatic repeat request acknowledgement HARQ-ACK retransmission related information; and
   a resource object corresponding to a DCI that has related HARQ-ACK but no corresponding data.

Optionally, the order based on DCIs indicating or scheduling the first resource object includes at least one of the following:
a descending or ascending order of frequency domain of a DCI;
an order based on a size of a control channel element index of a DCI;
an order based on a size of an identifier or index of a resource object combination scheduled by a DCI; and
an order based on a size of an identifier or index of a resource object set scheduled by a DCI.

Optionally, the preset resource object includes any one of the following:
a reference resource object;
a resource object with a largest or smallest SCS;
a resource object with a largest or smallest identifier;
a resource object with a largest or smallest index;
a resource object with a largest or smallest identifier among resource objects with corresponding data; and
a resource object with a largest or smallest index among resource objects with corresponding data.

Optionally, the first resource object combination is a resource object combination from at least two resource object combinations including the same first resource object. Optionally, when a DCI schedules or indicates the first resource object, the first resource object is counted X times, or X DAI counts are performed for the first resource object; where
X is a ratio of an SCS of a reference resource object in a resource object set or resource object combination to an SCS of the first resource object.

Optionally, the first resource object includes any one of the following:
a reference resource object;
a resource object corresponding to a target object;
a resource object corresponding to a target object among all resource objects with corresponding data in a resource object combination; and
a resource object corresponding to a DCI that has related HARQ-ACK but no corresponding data in the resource object combination; where
the resource object corresponding to the target object includes any one of the following:
   a resource object with a smallest or largest identifier;
   a resource object with a smallest or largest index;
   a resource object corresponding to a specific identifier;
   a resource object with a smallest or largest SCS;
   a resource object corresponding to a specific SCS, a specific CP, or a specific waveform;
   a resource object with a largest blind detection times or a largest blind detection capability;
   a resource object with a largest DCI count limit or a largest scheduling times limit;
   a resource object with a largest or smallest terminal capability;
   a resource object with a least blind detection times or a least blind detection capability;
   a resource object with a smallest DCI count limit or smallest scheduling times limit; and
   a resource object corresponding to dormancy indication information, enhanced type 3 codebook related information, or HARQ-ACK retransmission related information.

The reference resource object determining method according to the embodiments of the present application may be executed by a reference resource object determining apparatus. In the embodiments of the present application, the reference resource object determining apparatus executing the reference resource object determining method is taken as an example to explain the reference resource object determining apparatus according to the embodiments of the present application.

Referring to FIG. 7, an embodiment of the present application provides a reference resource object determining apparatus. As shown in FIG. 7, the reference resource object determining apparatus 700 includes:
a third determining module 701, configured to, in a case that a resource object set or a resource object combination includes at least one of resource objects with at least two SCSs and resource objects with at least two cyclic prefixes CPs, determine a reference resource object; and
an execution module 702, configured to perform at least one of the following based on the reference resource object: performing PDCCH reception, performing blind detection, determining a scheduling restriction, determining a DCI restriction, determining a terminal capability, determining a first resource object, determining target feedback information, and determining an uplink resource for sending target feedback information.

Optionally, the reference resource object satisfies any one of the following:
in a case that there is one reference resource object per resource object set, the reference resource object is a resource object corresponding to the target object in the resource object set;
in a case that there is one reference resource object per M resource object sets, the reference resource object is a resource object corresponding to the target object in the M resource object sets; where
the resource object corresponding to the target object includes any one of the following:
   a resource object with a smallest or largest identifier;
   a resource object with a smallest or largest index;
   a resource object corresponding to a specific identifier;
   a resource object with a smallest or largest SCS;
   a resource object corresponding to a specific SCS, a specific CP, or a specific waveform;
   a resource object with a largest blind detection times or a largest blind detection capability;
   a resource object with a largest DCI count limit or a largest scheduling times;
   a resource object with a largest or smallest terminal capability;
   a resource object with a least blind detection times or a least blind detection capability;
   a resource object with a smallest DCI count limit or smallest scheduling times limit; and
   a resource object corresponding to dormancy indication information, enhanced type 3 codebook related information, or hybrid automatic repeat request acknowledgement HARQ-ACK retransmission related information.

Optionally, the reference resource object satisfies at least one of the following:
the reference resource object and the first resource object are a same resource object;
the reference resource object and the first resource object have a same identifier or index;
the reference resource object and the first resource object have a same SCS;
the reference resource object and the first resource object have a same CP;
an SCS of the reference resource object is greater than or equal to an SCS of the first resource object;
a product of a ratio X of an SCS of the reference resource object to an SCS of the first resource object and Y is greater than or equal to N; and
a ratio X of an SCS of the reference resource object to an SCS of the first resource object is less than or equal to a quotient of N divided by Y; where N includes any one of the following: counting times corresponding to the first resource object; times that the first resource object is counted in the process of determining the target feedback information or codebook; or times that the first resource object is repeatedly counted in the process of determining a resource object set corresponding to the target feedback information or codebook; and
the first resource object is a resource object indicated or scheduled by DCI, Y represents a DCI count limit, scheduling times limit, or terminal capability corresponding to a first object, and the first object is one resource object, one resource object combination, one resource object set, or the first resource object.

Optionally, when a DCI schedules or indicates the first resource object, the first resource object is counted X times, or X DAI counts are performed for the first resource object.

The resource scheduling processing apparatus and the reference resource object determining apparatus in the embodiments of the present application each may be an electronic device, for example, an electronic device with an operating system, or may be a component in an electronic device, for example, an integrated circuit or a chip. The electronic device may be a terminal or may be another device except the terminal. For example, the terminal may include but is not limited to the types of the terminal 11 listed above, and the another device may be a server, a network attached storage (Network Attached Storage, NAS), or the like, which are not specifically limited in the embodiments of the present application.

The resource scheduling processing apparatus and the reference resource object determining apparatus provided in this embodiment of the present application can implement each process implemented by the method embodiments in FIG. 2 to FIG. 5, with the same technical effects achieved. To avoid repetition, details are not described herein again.

As shown in FIG. 8, an embodiment of the present application further provides a communication device 800 including a processor 801 and a memory 802, where the memory 802 stores a program or instructions capable of running on the processor 801, and when the program or instructions are executed by the processor 801, the steps of the foregoing resource scheduling processing method or reference resource object determining method embodiments are implemented, with the same technical effects achieved. To avoid repetition, details are not described herein again.

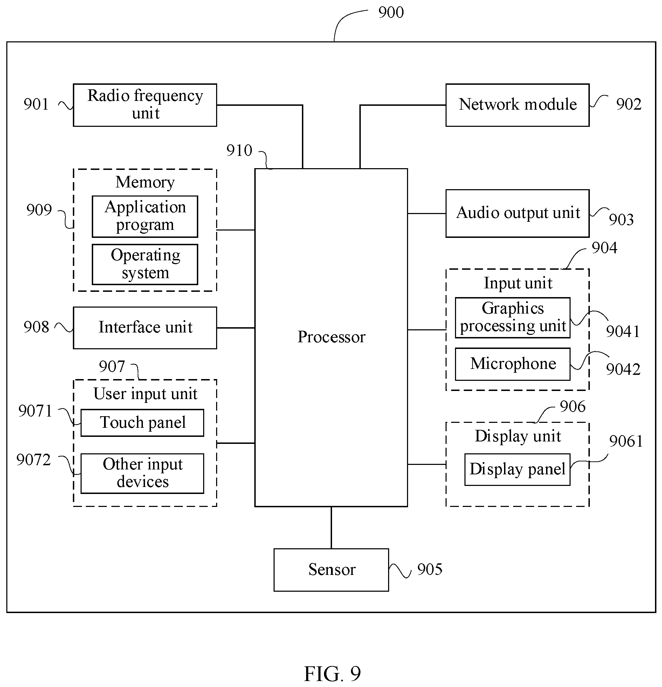

An embodiment of the present application further provides a terminal including a processor and a communication interface, where the communication interface is coupled to the processor, and the processor is configured to run a program or instructions to implement the steps of the method embodiment as shown in FIG. 2 or FIG. 4. This terminal embodiment corresponds to the foregoing method embodiment on the terminal side. All implementations in the foregoing method embodiment may be applicable to this terminal embodiment, with the same technical effects achieved. Specifically, FIG. 9 is a schematic structural diagram of hardware of a terminal for implementing embodiments of the present application.

The terminal 900 includes, but is not limited to, at least some of components such as a radio frequency unit 901, a network module 902, an audio output unit 903, an input unit 904, a sensor 905, a display unit 906, a user input unit 907, an interface unit 908, a memory 909, and a processor 910.

Persons skilled in the art can understand that the terminal 900 may further include a power supply (for example, a battery) for supplying power to the components. The power supply may be logically connected to the processor 910 through a power management system. In this way, functions such as charge management, discharge management, and power consumption management are implemented by using the power management system. The structure of the terminal shown in FIG. 9 does not constitute any limitation on the terminal. The terminal may include more or fewer components than shown in the figure, or a combination of some components, or the components disposed differently. Details are not described herein again.

It should be understood that in this embodiment of the present application, the input unit 904 may include a graphics processing unit (Graphics Processing Unit, GPU) 9041 and a microphone 9042. The graphics processing unit 9041 processes image data of a static picture or a video that is obtained by an image capture apparatus (for example, a camera) in a video capture mode or an image capture mode. The display unit 906 may include a display panel 9061, and the display panel 9061 may be configured in a form of a liquid crystal display, an organic light-emitting diode, and the like. The user input unit 907 includes at least one of a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function key (for example, a volume control key or a power on/off key), a trackball, a mouse, a joystick, and the like. Details are not described herein.

In this embodiment, after receiving downlink data from a network-side device, the radio frequency unit 901 may transmit the downlink data to the processor 910 for processing. In addition, the radio frequency unit 901 may transmit uplink data to the network-side device. Generally, the radio frequency unit 901 includes but is not limited to an antenna, an amplifier, a transceiver, a coupler, a low noise amplifier, and a duplexer.

The memory 909 may be configured to store software programs or instructions and various data. The memory 909 may include first storage area for storing programs or instructions and a second storage area for storing data. The first storage area may store an operating system, an application program or instruction required by at least one function (for example, a sound playback function or an image playback function), and the like. In addition, the memory 909 may include either a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 909 in this embodiment of the present application includes but is not limited to these and any other suitable types of memories.

The processor 910 may include one or more processing units. Optionally, an application processor and a modem processor are integrated in the processor 910. The application processor primarily processes operations relating to an operating system, user interfaces, application programs, and the like. The modem processor primarily processes radio communication signals, for example, being a baseband processor. It can be understood that the modem processor may alternatively be not integrated in the processor 910.

The processor 910 is configured to determine a target count, where the target count includes any one of the following: a first count of a first resource object, the first count satisfying that the first resource object is counted N times; and a second count of a downlink assignment index DAI for the first resource object, the second count satisfying that DAI counting is performed N times for the first resource object; determine target feedback information based on the target count; where the first resource object is a resource object indicated or scheduled by downlink control information DCI, N is an integer greater than 1, or the number of times that the first resource object is scheduled or indicated does not exceed 1; or
the processor 910 is configured to, in a case that a resource object set or a resource object combination includes at least one of resource objects with at least two SCSs and resource objects with at least two cyclic prefixes CPs, determine a reference resource object; and perform at least one of the following based on the reference resource object: performing PDCCH reception, performing blind detection, determining a scheduling restriction, determining a DCI restriction, determining a terminal capability, determining a first resource object, determining target feedback information, and determining an uplink resource for sending target feedback information.

It can be understood that the implementation processes of each implementation manner mentioned in this embodiment can refer to the related descriptions in the method embodiment, and achieve the same or corresponding technical effects, to avoid repetition, details are not described herein again.

An embodiment of the present application further provides a network-side device, including a processor and a communication interface, where the communication interface is coupled to the processor, and the processor is configured to run a program or instructions to implement the steps of the method embodiment as shown in FIG. 3. The network-side device embodiment corresponds to the foregoing network-side device method embodiment. All implementations in the foregoing method embodiment may be applicable to the network-side device embodiment, with the same technical effect achieved.

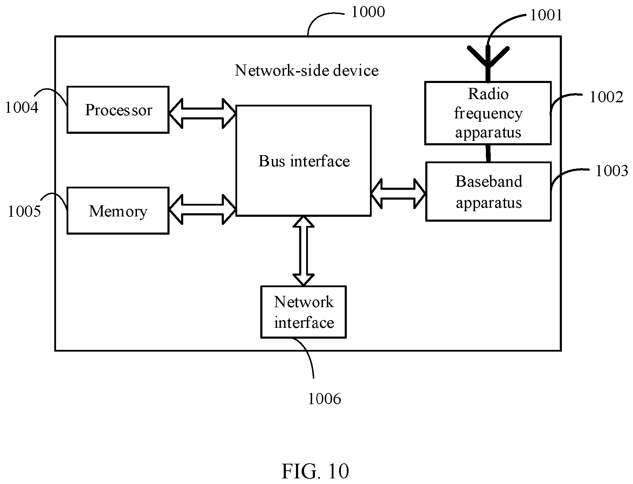

Specifically, an embodiment of the present application further provides a network-side device. As shown in FIG. 10, the network-side device 1000 includes: an antenna 1001, a radio frequency apparatus 1002, a baseband apparatus 1003, a processor 1004, and a memory 1005. The antenna 1001 is connected to the radio frequency apparatus 1002. In an uplink direction, the radio frequency apparatus 1002 receives information through the antenna 1001, and sends the received information to the baseband apparatus 1003 for processing. In a downlink direction, the baseband apparatus 1003 processes to-be-sent information, and sends the information to the radio frequency apparatus 1002; and the radio frequency apparatus 1002 processes the received information and then sends the information using the antenna 1001.

The method performed by the network-side device in the foregoing embodiment may be implemented in the baseband apparatus 1003, and the baseband apparatus 1003 includes a baseband processor.

The baseband apparatus 1003 may include, for example, at least one baseband board, where a plurality of chips are disposed on the baseband board. As shown in FIG. 10, one of the chips is, for example, the baseband processor, and connected to the memory 1005 through a bus interface, to invoke the program in the memory 1005 to perform the operations of the network-side device shown in the foregoing method embodiment.

The network-side device may further include a network interface 1006, where the interface is, for example, a common public radio interface (Common Public Radio Interface, CPRI).

Specifically, the network-side device 1000 in this embodiment of the present application further includes: instructions or a program stored in the memory 1005 and capable of running on the processor 1004. The processor 1004 invokes the instructions or program in the memory 1005 to execute the method executed by the modules shown in FIG. 6, with the same technical effects achieved. To avoid repetition, details are not described herein again.

An embodiment of the present application further provides a readable storage medium, where the readable storage medium stores a program or instructions, and when the program or instructions are executed by a processor, the processes of the foregoing resource scheduling processing method or reference resource object determining method embodiment are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc. In some examples, the readable storage medium may be a nontransitory readable storage medium.

In addition, an embodiment of the present application provides a chip. The chip includes a processor and a communication interface. The communication interface is coupled to the processor. The processor is configured to run a program or instructions to implement each process of the foregoing resource scheduling processing method or reference resource object determining method embodiment, with the same technical effects achieved. To avoid repetition, details are not described herein again.

It should be understood that the chip mentioned in this embodiment of the present application may also be referred to as a system-on-chip, a system chip, a system-on-a-chip, or a system on a chip, or the like.

An embodiment of the present application further provides a computer program/program product, where the computer program/program product is stored in a storage medium, and the computer program/program product is executed by at least one processor to implement the processes of the foregoing resource scheduling processing method or reference resource object determining method embodiment, with the same technical effects achieved. To avoid repetition, details are not described herein again.

An embodiment of the present application further provides a wireless communication system, including a terminal and a network-side device, where the terminal may be configured to execute the steps of the resource scheduling processing method on the terminal side as described above, and the network-side device may be configured to execute the steps of the resource scheduling processing method on the network-side device as described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of the present application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by a computer software product with a necessary general hardware platform. Certainly, the method in the foregoing embodiment may also be implemented by hardware. This computer software product is stored in a storage medium (such as ROM, RAM, magnetic disk, or optical disc) and includes a number of instructions to enable the terminal or the network-side device to execute the methods described in the various embodiments of the present application.

The foregoing describes the embodiments of the present application with reference to the accompanying drawings. However, the present application is not limited to the foregoing specific embodiments. The foregoing specific embodiments are merely illustrative rather than restrictive. As instructed by the present application, persons of ordinary skill in the art may further devise many forms of embodiments without departing from principles of the present application and the protection scope of the claims, and all these embodiments fall within the protection scope of the present application.

## Claims

1. A resource scheduling processing method, comprising:
determining, by a terminal, a target count, wherein the target count comprises: a first count of a first resource object, and the first count satisfies that the first resource object is counted N times; and
determining, by the terminal, target feedback information based on the target count; wherein
the first resource object is a resource object indicated or scheduled by downlink control information DCI, and N is an integer greater than 1.

2. The method according to claim 1, wherein N comprises at least one of the following:
the number of data scheduled or received on the first resource object;
a DCI count limit, scheduling times limit, or terminal capability corresponding to a first object, wherein the first object is one resource object, one resource object combination, or the first resource object;
a DCI count limit, scheduling times limit, or terminal capability corresponding to a second object, wherein the second object comprises a resource object set and any one of the following: one resource object, one resource object combination, and the first resource object; and
a DCI count limit, scheduling times limit, or terminal capability corresponding to a third object, wherein the third object comprises a resource object set;
the number of times that the first resource object is scheduled or indicated;
the number of DCIs scheduling or indicating the first resource object; and
the number of DCIs comprising an information field corresponding to the first resource object.

3. The method according to claim 1, wherein a target order of the N counts corresponding to the first resource object comprises any one of the following:
an order based on a start point or end point of data on the first resource object;
an order based on an earliest start point, earliest end point, latest start point, or latest end point of all data corresponding to a first resource object combination;
an order based on a start point or end point of data corresponding to a preset resource object in the first resource object combination;
an order based on DCIs indicating or scheduling the first resource object; and
an order based on first information of resource objects in the first resource object combination, wherein the first information comprises at least one of the following: identifier, index, SCS, blind detection times, blind detection capability, DCI count limit corresponding to the resource object, DCI scheduling times limit corresponding to the resource object, and terminal capability corresponding to the resource object.

4. The method according to claim 3, wherein in a case that the target arrangement order is an order based on a start point or end point of data corresponding to a first resource object or an order based on a start point or end point of data corresponding to a preset resource object in the first resource object combination, the target arrangement order satisfies any one of the following:
in a case that a target resource object scheduled or indicated by target DCI has no corresponding data, ranking data of the target resource object is determined based on a start point or end point of data corresponding to a second resource object, wherein the second resource object is a resource object satisfying a preset condition among all resource objects with corresponding data in a resource object combination scheduled by the target DCI; and
in a case that a target resource object scheduled or indicated by target DCI has no corresponding data or frequency domain resource allocation information corresponding to the target DCI is a target value, an arrangement order of the target resource object scheduled or indicated by the target DCI is an earliest one or a latest one; wherein
the target value is an invalid value or specific value, the target resource object is the first resource object or the preset resource object, and the resource object satisfying the preset condition comprises any one of the following:
a resource object with a smallest or largest identifier;
a resource object with a smallest or largest index;
a resource object corresponding to a specific identifier;
a resource object with a smallest or largest SCS;
a resource object corresponding to a specific SCS, a specific CP, or a specific waveform;
a resource object with a largest blind detection times or a largest blind detection capability;
a resource object with a largest DCI count limit or a largest scheduling times limit;
a resource object with a largest or smallest terminal capability;
a resource object with a least blind detection times or a least blind detection capability;
a resource object with a smallest DCI count limit or smallest scheduling times limit;
a resource object corresponding to dormancy indication information, enhanced type 3 codebook related information, or hybrid automatic repeat request acknowledgement HARQ-ACK retransmission related information; and
a resource object corresponding to a DCI that has related HARQ-ACK but no corresponding data.

5. The method according to claim 3, wherein the order based on DCIs indicating or scheduling the first resource object comprises at least one of the following:
a descending or ascending order of frequency domain of a DCI;
an order based on a size of a control channel element index of a DCI;
an order based on a size of an identifier or index of a resource object combination scheduled by a DCI; and
an order based on a size of an identifier or index of a resource object set scheduled by a DCI.

6. The method according to claim 3, wherein the preset resource object comprises any one of the following:
a reference resource object;
a resource object with a largest or smallest SCS;
a resource object with a largest or smallest identifier;
a resource object with a largest or smallest index;
a resource object with a largest or smallest identifier among resource objects with corresponding data; and
a resource object with a largest or smallest index among resource objects with corresponding data.

7. The method according to claim 3, wherein the first resource object combination is at least two resource object combinations comprising the same first resource object.

8. The method according to claim 1, wherein when a DCI schedules or indicates the first resource object, the first resource object is counted X times, or X DAI counts are performed for the first resource object; wherein
X is a ratio of an SCS of a reference resource object in a resource object set or resource object combination to an SCS of the first resource object.

9. The method according to any one of claims 1 to 8, wherein the first resource object comprises any one of the following:
a reference resource object;
a resource object corresponding to a target object;
a resource object corresponding to a target object among all resource objects with corresponding data in a resource object combination; and
a resource object corresponding to a DCI that has related HARQ-ACK but no corresponding data in the resource object combination; wherein
the resource object corresponding to the target object comprises any one of the following:
a resource object with a smallest or largest identifier;
a resource object with a smallest or largest index;
a resource object corresponding to a specific identifier;
a resource object with a smallest or largest SCS;
a resource object corresponding to a specific SCS, a specific CP, or a specific waveform;
a resource object with a largest blind detection times or a largest blind detection capability;
a resource object with a largest DCI count limit or a largest scheduling times limit;
a resource object with a largest or smallest terminal capability;
a resource object with a least blind detection times or a least blind detection capability;
a resource object with a smallest DCI count limit or smallest scheduling times limit; and
a resource object corresponding to dormancy indication information, enhanced type 3 codebook related information, or HARQ-ACK retransmission related information.

10. The method according to any one of claims 1 to 9, wherein the determining, by the terminal, target feedback information based on the target count comprises:
determining, by the terminal, at least one of a position, order, and bit count of the target feedback information based on the target count.

11. The method according to any one of claims 1 to 9, wherein the determining, by the terminal, target feedback information based on the target count comprises:
determining, by the terminal, a first resource object set based on the target count; and
determining, by the terminal, at least one of a position, order, and bit count of the target feedback information based on the first resource object set.

12. The method according to claim 11, wherein the first resource object set comprises at least one of the following:
a set composed of resource objects corresponding to a target object in all resource object combinations of all resource object sets;
a set composed of objects in all resource object combinations of all resource object sets; and
a set of all first resource objects in all resource object sets; wherein
the first resource object comprises any one of the following: a reference resource object; a resource object corresponding to a target object; a resource object corresponding to a target object among all resource objects with corresponding data in a resource object combination; and a resource object corresponding to a DCI that has related HARQ-ACK but no corresponding data in the resource object combination; wherein
the resource object corresponding to the target object comprises any one of the following:
a resource object with a smallest or largest identifier;
a resource object with a smallest or largest index;
a resource object corresponding to a specific identifier;
a resource object with a smallest or largest SCS;
a resource object corresponding to a specific SCS, a specific CP, or a specific waveform;
a resource object with a largest blind detection times or a largest blind detection capability;
a resource object with a largest DCI count limit or scheduling times limit;
a resource object with a largest or smallest terminal capability;
a resource object with a least blind detection times or a least blind detection capability;
a resource object with a smallest DCI count limit or scheduling times limit; and
a resource object corresponding to dormancy indication information, enhanced type 3 codebook related information, or HARQ-ACK retransmission related information.

13. The method according to claim 11, wherein the terminal determining at least one of a position, order, and bit count of the target feedback information based on the first resource object set comprises at least one of the following:
determining, by the terminal, an order or position of the target feedback information based on a sorting or position of resource objects in the first resource object set; and
determining, by the terminal, a bit count of the target feedback information based on the number of resource objects in the first resource object set.

14. The method according to any one of claims 11 to 13, wherein resource objects in the first resource object set are sorted based on first information, wherein the first information comprises any one of the following: identifier, index, SCS, blind detection times, blind detection capability, DCI count limit corresponding to the resource object, DCI scheduling times limit corresponding to the resource object, and terminal capability corresponding to the resource object.

15. The method according to any one of claims 11 to 14, wherein the number of resource objects included in the first resource object set is determined based on any one of the following:
the number of resource objects in a resource object set that comprises a maximum number of resource objects;
the number of first resource objects in a resource object set that includes a maximum number of first resource objects; and
the number of first resource objects in a resource object combination.

16. A resource scheduling processing method, **characterized by** comprising:
sending, by a network-side device, downlink control information DCI to a terminal, wherein the DCI is used for scheduling a resource object combination, and the resource object combination comprises a first resource object; wherein
the first resource object is counted N times; and
N is an integer greater than 1.

17. A reference resource object determining method, comprising:
in a case that a resource object set or a resource object combination comprises at least one of resource objects with at least two SCSs and resource objects with at least two cyclic prefixes CPs, determining, by a terminal, a reference resource object; and
performing, by the terminal, at least one of the following based on the reference resource object: performing PDCCH reception, performing blind detection, determining a scheduling restriction, determining a DCI restriction, determining a terminal capability, determining a first resource object, determining target feedback information, and determining an uplink resource for sending target feedback information.

18. The method according to claim 17, wherein the reference resource object satisfies any one of the following:
in a case that there is one reference resource object per resource object set, the reference resource object is a resource object corresponding to a target object in the resource object set; and
in a case that there is one reference resource object per M resource object sets, the reference resource object is a resource object corresponding to a target object in the M resource object sets; wherein
the resource object corresponding to the target object comprises any one of the following:
a resource object with a smallest or largest identifier;
a resource object with a smallest or largest index;
a resource object corresponding to a specific identifier;
a resource object with a smallest or largest SCS;
a resource object corresponding to a specific SCS, a specific CP, or a specific waveform;
a resource object with a largest blind detection times or a largest blind detection capability;
a resource object with a largest DCI count limit or a largest scheduling times;
a resource object with a largest or smallest terminal capability;
a resource object with a least blind detection times or a least blind detection capability;
a resource object with a smallest DCI count limit or smallest scheduling times limit; and
a resource object corresponding to dormancy indication information, enhanced type 3 codebook related information, or hybrid automatic repeat request acknowledgement HARQ-ACK retransmission related information.

19. The method according to claim 17, wherein the reference resource object satisfies at least one of the following:
the reference resource object and the first resource object are a same resource object;
the reference resource object and the first resource object have a same identifier or index;
the reference resource object and the first resource object have a same SCS;
the reference resource object and the first resource object have a same CP;
an SCS of the reference resource object is greater than or equal to an SCS of the first resource object;
a product of a ratio X of an SCS of the reference resource object to an SCS of the first resource object and Y is greater than or equal to N; and
a ratio X of an SCS of the reference resource object to an SCS of the first resource object is less than or equal to a quotient of N divided by Y; wherein
N comprises any one of the following: counting times corresponding to the first resource object; times that the first resource object is counted in the process of determining the target feedback information or codebook; or times that the first resource object is repeatedly counted in the process of determining a resource object set corresponding to the target feedback information or codebook; wherein
the first resource object is a resource object indicated or scheduled by DCI, Y represents a DCI count limit, scheduling times limit, or terminal capability corresponding to a first object, and the first object is one resource object, one resource object combination, one resource object set, or the first resource object.

20. The method according to claim 19, wherein when a DCI schedules or indicates the first resource object, the first resource object is counted X times, or X DAI counts are performed for the first resource object.

21. A resource scheduling processing apparatus, **characterized by** comprising:
a first determining module, configured to determine a target count, wherein the target count comprises a first count of a first resource object, and the first count satisfies that the first resource object is counted N times; and
a second determining module, configured to determine target feedback information based on the target count; wherein
the first resource object is a resource object indicated or scheduled by downlink control information DCI, and N is an integer greater than 1.

22. A resource scheduling processing apparatus, comprising:
a sending module, configured to send downlink control information DCI to a terminal, wherein the DCI is used for scheduling a resource object combination, and the resource object combination comprises a first resource object; wherein
the first resource object is counted N times, or DAI counting is performed N times for the first resource object; wherein
N is an integer greater than 1.

23. A reference resource object determining apparatus, comprising:
a third determining module, configured to, in a case that a resource object set or a resource object combination comprises at least one of resource objects with at least two SCSs and resource objects with at least two cyclic prefixes CPs, determine a reference resource object; and
an execution module, configured to perform at least one of the following based on the reference resource object: performing PDCCH reception, performing blind detection, determining a scheduling restriction, determining a DCI restriction, determining a terminal capability, determining a first resource object, determining target feedback information, and determining an uplink resource for sending target feedback information.

24. A terminal, comprising a processor and a memory, wherein the memory stores a program or instructions executable on the processor, and the program or instructions, when executed by the processor, implement the steps of the resource scheduling processing method according to any one of claims 1 to 16.

25. A network-side device, comprising a processor and a memory, wherein the memory stores a program or instructions executable on the processor, and the program or instructions, when executed by the processor, implement the steps of the reference resource object determining method according to any one of claims 17 to 20.

26. A readable storage medium, wherein the readable storage medium stores a program or instructions, and the program or instructions, when executed by a processor, implement the steps of the resource scheduling processing method according to any one of claims 1 to 16, or implement the steps of the reference resource object determining method according to any one of claims 17 to 20.

27. A chip, wherein the chip comprises a processor and a communication interface, wherein the communication interface is coupled with the processor, and the processor is configured to run a program or instructions to implement the method according to any one of claims 1 to 20.

28. A computer program product, wherein the program product is executed by at least one processor to implement the method according to any one of claims 1 to 20.

29. An electronic device, wherein the electronic device is configured to perform the method according to any one of claims 1 to 20.
